(19) Europäisches Patentamt / European Patent Office / Office européen des brevets

(11) **EP 4 311 352 A1**

(12) **EUROPEAN PATENT APPLICATION**
published in accordance with Art. 153(4) EPC

(43) Date of publication:
**24.01.2024 Bulletin 2024/04**

(21) Application number: **22736884.2**

(22) Date of filing: **07.01.2022**

(51) International Patent Classification (IPC):
*H04W 72/12* (2023.01)     *H04W 72/04* (2023.01)
*H04W 76/28* (2018.01)     *H04W 92/18* (2009.01)
*H04L 1/18* (2023.01)

(52) Cooperative Patent Classification (CPC):
**H04L 1/18; H04W 72/04; H04W 72/12;
H04W 76/28; H04W 92/18**

(86) International application number:
**PCT/KR2022/000302**

(87) International publication number:
**WO 2022/149907 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.01.2021  KR 20210002548
25.02.2021  KR 20210025876
06.01.2022  KR 20220001995**

(71) Applicant: **KT Corporation
Seongnam-si, Gyeonggi-do 13606 (KR)**

(72) Inventor: **HONG, Sung-pyo
Seongnam-si Gyeonggi-do 13606 (KR)**

(74) Representative: **Brevalex
Tour Trinity
1 B Place de la Défense
92400 Courbevoie (FR)**

(54) **METHOD FOR CONTROLLING SIDELINK COMMUNICATION, AND DEVICE THEREFOR**

(57)     Provided are methods and apparatus for controlling sidelink communication by using a DRX operation. The method may include receiving a sidelink radio resource control (RRC) message from a base station or another terminal, configuring a sidelink discontinuous reception (DRX) parameter by using information included in the sidelink RRC message, and monitoring the reception of sidelink data by using the sidelink DRX parameter

*FIG.9*

**Description**

[Technical Field]

The present disclosure relates to controlling sidelink communication using a DRX operation.

[Background Art]

There is demand for developing technology for processing a large amount of data at a high speed for providing various services using wireless terminals in vehicles and industrial sites. Further, it is required to develop a technology for a high-rate, large-capacity communication system capable of processing various scenarios and large-volume data, such as video, wireless data, and machine-type communication data, beyond a simple voice-oriented service.

To this end, the international telecommunication union radio communication sector (ITU-R) introduces the requirements for adopting the international mobile telecommunications (IMT)-2020 international standard, and many studies have been conducted for advancing next-generation wireless communication technology to meet the requirements of IMT-2020.

In particular, the 3rd generation partnership project (3GPP) is conducting research on the long term evolution (LTE)-advanced Pro Rel-15/16 standards and the new radio access technology (NR) standard in parallel to meet the requirements for IMT-2020 called 5th generation (5G) technology, and 3GPP has a plan to approve the two standards as next-generation wireless communication technology.

Such 5G technology may be applied and utilized in autonomous vehicles. For this, it is necessary to apply the 5G technology to sidelink communication (e.g., vehicle communication (V2X)), and autonomous driving requires high speed data transmission and reception while guaranteeing high reliability.

Further, to meet driving scenarios of various autonomous vehicles, such as platooning, it is required to ensure various types of data communication, such as multicast data transmission/reception as well as multiple unicast data transmissions/receptions using sidelink communication.

However, UE performing sidelink communication should continuously monitor control data or user data in the sidelink radio resource to identify whether sidelink communication data is received. Such operation may cause significant power consumption.

[Detailed Description of the Invention]

[Technical Problem]

In the foregoing background, the disclosure discloses a method and apparatus for controlling sidelink communication using a sidelink discontinuous reception (DRX) operation.

[Technical Solution]

In an aspect, a method may be provided for performing sidelink communication by a UE. The method may include receiving a sidelink radio resource control (RRC) message from a base station or another UE, configuring a sidelink discontinuous reception (DRX) parameter using information included in the sidelink RRC message, and monitoring reception of sidelink data using the sidelink DRX parameter.

In another aspect, a method may be provided for performing sidelink communication by another UE. The method may include transmitting a sidelink radio resource control (RRC) message to a UE, receiving a sidelink channel status information (CSI) request from the UE, and controlling to transmit the sidelink channel status information while a sidelink DRX CSI timer operates in the UE.

In still another aspect, a UE may be provided for performing sidelink communication. The UE may include a receiver receiving a sidelink radio resource control (RRC) message from a base station or another UE, and a controller configuring a sidelink discontinuous reception (DRX) parameter using information included in the sidelink RRC message and monitoring reception of sidelink data using the sidelink DRX parameter.

In further still another aspect, another UE may be provided for performing sidelink communication. The UE may include a transmitter transmitting a sidelink radio resource control (RRC) message to a UE, a receiver receiving a sidelink channel status information (CSI) request from the UE, and a controller controlling to transmit the sidelink channel status information while a sidelink DRX CSI timer operates in the UE.

[Advantageous Effects]

In accordance with an embodiment, sidelink communication may be controlled using a DRX operation.

[Brief Description of Drawings]

FIG. 1 is a view schematically illustrating a structure for an NR wireless communication system.
FIG. 2 is a view illustrating a frame structure in an NR system.
FIG. 3 is a view illustrating a resource grid supported by radio access technology.
FIG. 4 is a view illustrating a bandwidth part supported by radio access technology.
FIG. 5 is a view exemplarily illustrating a synchronization signal block in radio access technology.
FIG. 6 is a view illustrating a random access procedure in radio access technology.
FIG. 7 is a view illustrating a CORESET.
FIG. 8 is a view illustrating an architecture of a V2X communication system in an LTE system.
FIG. 9 is a flowchart illustrating operations of a UE according to an embodiment.
FIG. 10 is a flowchart for describing operations of another UE according to an embodiment.
FIG. 11 is a block diagram for describing a UE according to an embodiment.
FIG. 12 is a block diagram illustrating another UE according to an embodiment.

[Mode for Carrying out the Invention]

Hereinafter, embodiments of the disclosure are described in detail with reference to the accompanying drawings. In assigning reference numerals to components of each drawing, the same components may be assigned the same numerals even when they are shown on different drawings. When determined to make the subject matter of the disclosure unclear, the detailed of the known art or functions may be skipped. The terms "comprises" and/or "comprising," "has" and/or "having," or "includes" and/or "including" when used in this specification specify the presence of stated features, regions, integers, steps, operations, elements, and/or components, but do not preclude the presence or addition of one or more other features, regions, integers, steps, operations, elements, components, and/or groups thereof. As used herein, the singular forms "a", "an" and "the" are intended to include the plural forms as well, unless the context clearly indicates otherwise.

Such denotations as "first," "second," "A," "B," "(a)," and "(b)," may be used in describing the components of the embodiments. These denotations are provided merely to distinguish a component from another, and the essence, order, or number of the components are not limited by the denotations.

In describing the positional relationship between components, when two or more components are described as "connected", "coupled" or "linked", the two or more components may be directly "connected", "coupled" or "linked" ", or another component may intervene. Here, the other component may be included in one or more of the two or more components that are "connected", "coupled" or "linked" to each other.

When such terms as, e.g., "after", "next to", "after", and "before", are used to describe the temporal flow relationship related to components, operation methods, and fabricating methods, it may include a non-continuous relationship unless the term "immediately" or "directly" is used.

When a component is designated with a value or its corresponding information (e.g., level), the value or the corresponding information may be interpreted as including a tolerance that may arise due to various factors (e.g., process factors, internal or external impacts, or noise).

In the disclosure, 'wireless communication system' means a system for providing various communication services, such as a voice service and a data packet service, using a radio resource and may include a user equipment (UE), a base station, or a core network.

The embodiments disclosed below may be applied to wireless communication systems using various radio access technologies. For example, the embodiments may be applied to various radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Further, radio access technology may mean not only a specific access technology, but also a communication technology for each generation established by various communication organizations, such as 3$^{rd}$ generation partnership project (3GPP,) 3GPP2, Wi-Fi, Bluetooth, institute of electrical and electronics engineers (IEEE), and international telecommunication union (ITU). For example, CDMA may be implemented as radio technology, such as universal terrestrial radio access (UTRA) or CDMA2000. TDMA may be implemented as GSM (global system for mobile communications) /GPRS (general packet radio service)/ EDGE (enhanced data rates for GSM evolution). OFDMA may be implemented with a wireless technology, such as institute of electrical and electronic engineers (IEEE) 802.11 (Wi-Fi), IEEE 802.16 (WiMAX), IEEE 802-20, evolved UTRA (E-UTRA), and the like. IEEE 802.16m is an evolution of IEEE 802.16e, and provides backward compatibility with IEEE 802.16e-based systems. UTRA is part of UMTS (universal mobile telecommunications system). 3GPP (3rd generation partnership project) LTE (long term evolution) is part of E-UMTS (evolved UMTS) using evolved-UMTS terrestrial radio access (E-UTRA) and adopts OFDMA for downlink and SC-FDMA for uplink. As such, the present embodiments may be applied to currently disclosed or commercialized radio access technologies and may also be applied to radio access technologies currently under development or to be developed in the future.

Meanwhile, in the disclosure, 'UE' is a comprehensive concept meaning a device including a wireless communication module (e.g., circuit) that communicates with a base station in a wireless communication system and should be interpreted as a concept that may include not only user equipment (UE) in, e.g., WCDMA, LTE, NR, HSPA, and IMT-2020 (5G or new radio), but also a mobile station (MS), user terminal (UT), subscriber station (SS), or wireless device in GSM. Further, the UE may be a user portable device, such as a smartphone, according to the usage type and, in the vehicle to everything (V2X) communication system, the UE may mean a vehicle or a device including a wireless communication module in the vehicle. Further, in the case of a machine type communication system, the UE may mean a machine type communication (MTC) terminal, machine to machine (M2M) terminal, or ultra-reliable low-latency communications (URLLC) terminal equipped with a communication module to perform machine type communication.

In the disclosure, 'base station' or 'cell' refers to a terminal that communicates with a UE in terms of a network and in concept encompasses various coverage areas, such as node-B, evolved node-B (eNB), gNode-B (gNB), low power node (LPN), sector, site, various types of antennas, base transceiver system (BTS), access point, point (e.g. transmission point, reception point, or transmission/reception point), relay node, mega cell, macro cell, micro cell, pico cell, femto cell, remote radio head (RRH), radio unit (RU), or small cell. Further, 'cell' may mean one including a bandwidth part (BWP) in the frequency domain. For example, 'serving cell' may mean the activation BWP of the UE.

Since there is a base station controlling one or more cells in the various cells enumerated above, the base station may be interpreted in two meanings. The base station may be 1) a device itself which provides a mega cell, a macro cell, a micro cell, a pico cell, a femto cell, or a small cell in relation to the radio region, or 2) the radio region itself. In 1), the base station may be all devices that provide a predetermined radio region and are controlled by the same entity or interact to configure a radio region via cooperation. An embodiment of the base station is a transmission/reception point, transmission point, or reception point depending on the scheme of configuring the radio region. In 2), the base station may be the radio region itself, in which a signal is received or transmitted from the point of view of the UE or a neighboring base station.

In the disclosure, 'cell' may mean the coverage of the signal transmitted from the transmission/reception point, a component carrier having the coverage of the signal transmitted from the transmission/reception point (transmission point or transmission/reception point), or the transmission/reception point itself.

Uplink (UL) means a scheme for transmitting/receiving data to and from the base station by the UE, and downlink (DL) means a scheme for transmitting/receiving data to/from the UE by the base station. Downlink may mean communication or communication path from the multiple transmission/transmission points to the UE, and uplink may mean communication or communication path from the UE to the multiple transmission/reception points. In this case, in the downlink, the transmitter may be part of the multiple transmission/reception points, and the receiver may be part of the UE. Further, in the uplink, the transmitter may be part of the UE, and the receiver may be part of the multiple transmission/reception points.

Uplink and downlink transmits/receives control information through a control channel, such as physical downlink control channel (PDCCH) or physical uplink control channel (PUCCH). Uplink and downlink transmits or receives data through a data channel, such as physical downlink shared channel (PDSCH) or physical uplink shared channel (PUSCH). Hereinafter, "signals are transmitted/received through a channel, such as PUCCH, PUSCH, PDCCH, and PDSCH," is expressed as 'transmitting or receiving PUCCH, PUSCH, PDCCH, and PDSCH.'

Although the technical spirit is described focusing primarily on the 3GPP LTE/LTE-A/new RAT (NR) communication system for clarity of description, the technical features are not limited to such communication system.

3GPP develops 5th-generation (5G) communication technology to meet the requirements of ITU-R's next-generation radio access technology after 4th-generation (4G) communication technology. Specifically, 3GPP develops new radio (NR) communication technology separate from LTE-A pro and 4G communication technology, which have enhanced LTE-advanced technology to meet the requirements of ITU-R, as 5G communication technology. Both LTE-A pro and NR refer to 5G communication technologies. Hereinafter, 5G communication technology is described focusing on NR unless specified as a specific communication technology.

NR defines various operating scenarios by adding considerations of satellites, automobiles, and new verticals in the typical 4G LTE scenarios and, from a service point of view. The operating scenarios may include i) the enhanced mobile broadband (eMBB) scenario, ii) the massive machine communication (mMTC) scenario that has high UE density but is deployed in a wide range to requires a low data rate and asynchronous access, and iii) the ultra-reliability and low latency (URLLC) scenario that requires high responsiveness and reliability and may support highspeed mobility.

To meet such scenarios, NR discloses wireless communication systems that adopt a new waveform and frame structure technology, low-latency technology, ultra-high frequency band (mmWave) supporting technology, and forward compatibility providing technology. In particular, the NR system suggests various technical changes in terms of flexibility to provide forward compatibility. The main technical features of NR are described below with reference to the accompanying drawings.

<Overview of NR system>

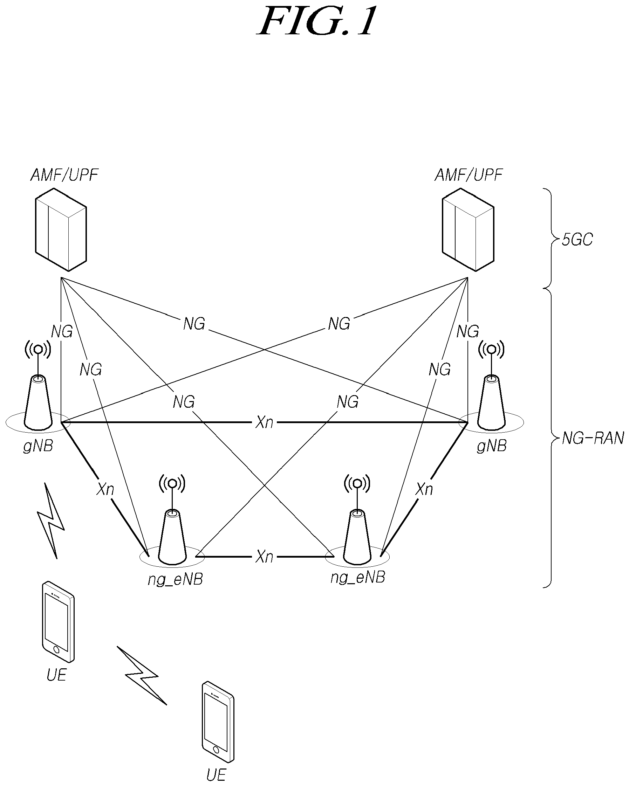

FIG. 1 is a view illustrating a structure for an NR system.

Referring to FIG. 1, the NR system is divided into a 5G core network (5GC) and an NR-radio access network (RAN) part. The NG-RAN is constituted of gNB and ng-eNBs providing user plane (SDAP/PDCP/RLC/MAC/PHY) and user equipment (UE) control plane (RRC) protocol termination. The gNBs or the gNBs and the ng-eNBs are interconnected through the Xn interface. The gNB and the ng-eNB are connected to the 5GC through the NG interface. The 5GC may include i) an access and mobility management function (AMF) which is in charge of the control plane, such as UE access and mobility control function, and ii) a user plane function (UPF) which is in charge of the user data control function. NR supports both the below-6GHz frequency band (Frequency Range 1 (FR1) and above-6GHz frequency band (Frequency Range 2 (FR2)).

The gNB means a base station that provides the UE with NR user plane and control plane protocol termination, and the ng-eNB means a base station that provides the UE with the E-UTRA user plane and control plane protocol termination. In the disclosure, the base station should be understood as encompassing gNB and ng-eNB and, as necessary, be used to separately denote gNB or ng-eNB.

<NR waveform, numerology, and frame structure>

NR uses a cyclic prefix (CP)-OFDM waveform using a cyclic prefix for downlink transmission and CP-OFDM or discrete Fourier transform (DFT)-spread(s)-OFDM for uplink transmission. OFDM technology is easily combined with multiple input multiple output (MIMO) and has the advantages of high frequency efficiency and capability of using a low-complexity receiver.

Meanwhile, since the above-described three scenarios have different requirements for data rate, latency, and coverage in NR, it is needed to efficiently meet the requirements for each scenario through the frequency band constituting any NR system. To that end, technology has been introduced for efficiently multiplexing radio resources based on a plurality of different numerologies.

Specifically, the NR transmission numerology is determined based on the subcarrier spacing and cyclic prefix (CP) and, as shown in Table 1 below, it is exponentially changed, with the exponent value of 2 used as $\mu$ with respect to 15kHz.

[Table 1]

| M | subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

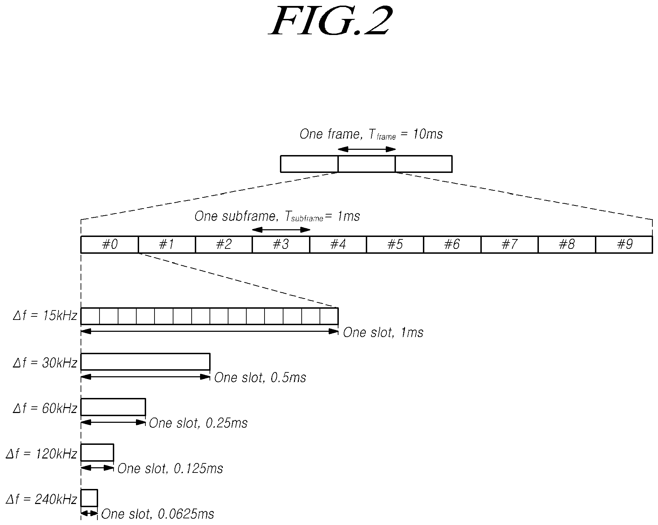

As shown in Table 1 above, the NR numerologies may be divided into five types depending on the subcarrier spacing. This differs from the subcarrier spacing fixed to 15kHz in LTE which is one 4G communication technology. Specifically, in NR, the subcarrier spacings used for data transmission are 15, 30, 60, and 120 kHz, and the subcarrier spacings used for synchronization signal transmission are 15, 30, 120, and 240 kHz. Further, the extended CP is applied only to the 60kHz subcarrier spacing. Meanwhile, as the frame structure in NR, a frame having a length of 10ms, which is constituted of 10 subframes having the same length of 1ms, is defined. One frame may be divided into half frames of 5 ms, and each half frame may include 5 subframes. In the case of a 15 kHz subcarrier spacing, one subframe is constituted of one slot, and each slot is constituted of 14 OFDM symbols. FIG. 2 is a view illustrating a frame structure in an NR system.

Referring to FIG. 2, a slot is fixedly composed of 14 OFDM symbols in the case of a normal CP, but the length of the slot in the time domain may vary depending on the subcarrier spacing. For example, in the case of a numerology having a 15kHz subcarrier spacing, a slot has the same length as the subframe, as the length of 1ms. In contrast, in the case of a numerology having a 30 kHz subcarrier spacing, a slot is constituted of 14 OFDM symbols, but two slots may be included in one subframe, as the length of 0.5ms. In other words, the subframe and the frame are defined as having a fixed length, and the slot is defined with the number of symbols, and the temporal length may vary depending on the subcarrier spacing.

Meanwhile, NR defines a slot as a basic unit for scheduling and a minislot (or subslot or non-slot based schedule) to reduce transmission latency in the radio section. When a wide subcarrier spacing is used, the length of one slot is inverse-proportionally shortened. Accordingly, it is possible to reduce transmission latency in the radio section. The minislot is for efficient support of the URLLC scenario and enables scheduling in the units of 2, 4, or 7 symbols.

Further, NR defines uplink and downlink resource allocation as the symbol level in one slot, unlike LTE. To reduce HARQ latency, NR defines a slot structure that enables HARQ ACK/NACK to be transmitted directly in the transmission slot, and such slot structure is referred to as a self-contained structure in the description.

NR has been designed to support a total of 256 slots. Among them, 62 slot formats are used in 3GPP Rel-15. Further, NR supports a common frame structure constituting the FDD or TDD frame through a combination of various slots. For example, NR supports i) a slot structure in which the symbols of the slot all are configured as downlink, ii) a slot structure in which all the symbols are configured as uplink, and iii) a slot structure in which downlink symbols and uplink symbols are combined. Further, NR supports data transmission that is distributed and scheduled in one or more slots. Therefore, the base station may inform the UE whether the slot is a downlink slot, uplink slot, or flexible slot using the slot format indicator (SFI). The base station may indicate a slot format by indicating the index of the table configured through UE-specific RRC signaling, by SFI and may indicate it dynamically through downlink control information (DCI) or statically or semi-statically through RRC.

<NR physical resource>

In NR, physical resources may include antenna port, resource grid, resource element, resource block, and bandwidth part.

An antenna port is defined so that a channel carried by a symbol on an antenna port may be inferred from the channel carried by another symbol on the same antenna port. Where the large-scale property of the channel carrying a symbol on one antenna port may be inferred from the channel carrying a symbol on a different antenna port, the two antenna ports may be said to have a QC/QCL (quasi co-located or quasi co-location) relationship. Here, the large-scale properties include one or more of delay spread, Doppler spread, frequency shift, average received power, and received timing.

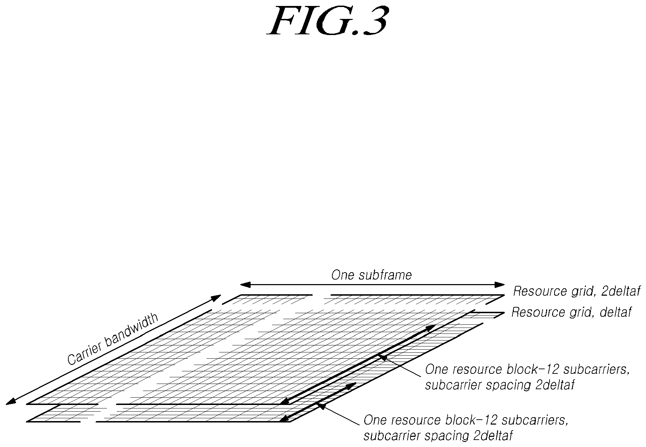

FIG. 3 is a view illustrating a resource grid supported by radio access technology.

Referring to FIG. 3, since NR supports a plurality of numerologies in the same carrier, a resource grid may exist depending on each numerology. Further, the resource grid may exist depending on the antenna port, subcarrier spacing, or transmission direction.

The resource block is constituted of 12 subcarriers and is defined only in the frequency domain. Further, the resource element is constituted of one OFDM symbol and one subcarrier. Therefore, as shown in FIG. 3, the size of one resource block may vary depending on the subcarrier spacing. Further, in NR, "point A", which serves as a common reference point for the resource block grid, and common resource block and virtual resource block are defined.

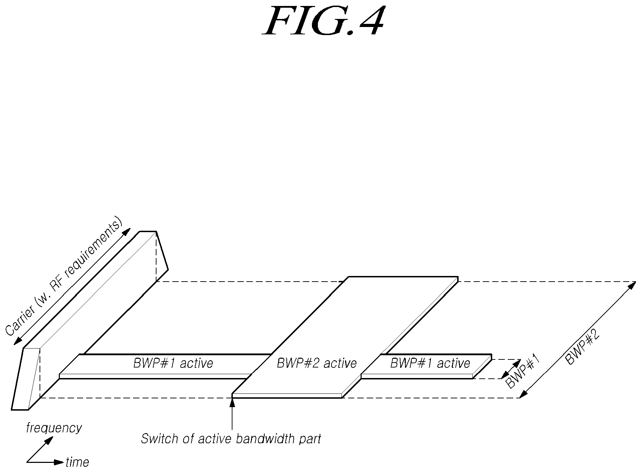

FIG. 4 is a view illustrating a bandwidth part supported by radio access technology.

In NR, unlike LTE where the carrier bandwidth is fixed to 20Mhz, the maximum carrier bandwidth from 50Mhz to 400Mhz is set for each subcarrier spacing. Therefore, it is not assumed that all UEs use all of these carrier bandwidths. Accordingly, in NR, as shown in FIG. 4, a bandwidth part (BWP) may be designated within the carrier bandwidth and used by the UE. Further, the bandwidth part is associated with one numerology and is composed of a subset of contiguous common resource blocks and may be activated dynamically over time. Up to four bandwidth parts may be configured in the UE for each uplink and downlink. Data is transmitted/received using the bandwidth part activated at a given time.

In the case of paired spectra, the uplink and downlink bandwidth parts are set independently. In the case of unpaired spectra, the bandwidth parts of uplink and downlink are set to make a pair to share the center frequency so as to prevent unnecessary frequency re-tunning between downlink and uplink operations.

<NR initial access>

In NR, the UE performs a cell search and random access procedure to access the base station and perform communication.

In the cell search procedure, the UE is synchronized with the cell of the base station using the synchronization signal block (SSB) transmitted from the base station, and the physical layer cell ID and system information are obtained.

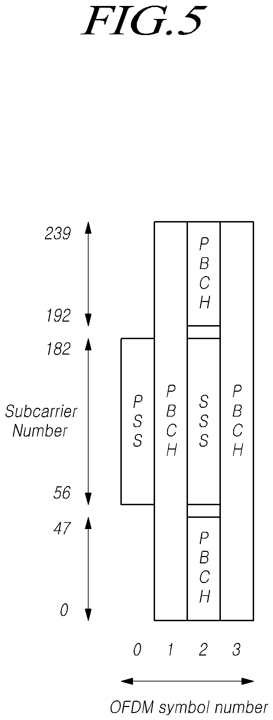

FIG. 5 is a view illustrating a synchronization signal block in radio access technology.

Referring to FIG. 5, a synchronization signal block (SSB) is constituted of a primary synchronization signal (PSS) and a secondary synchronization signal (SSS) occupying 1 symbol and 127 subcarriers, respectively, and a PBCH spanning 3 OFDM symbols and 240 subcarriers.

The UE monitors the SSB in time and frequency domains and receives the SSB.

The SSB may be transmitted up to 64 times in 5 ms. Multiple SSBs are transmitted on different transmission beams within 5 ms time, and the UE performs detection assuming that SSBs are transmitted every 20ms period based on one specific beam used for transmission. The number of beams available for SSB transmission within 5ms may increase as the frequency band increases. For example, up to 4 SSB beams may be transmitted below 3 GHz, SSBs may be transmitted using up to 8 different beams in a frequency band of 3 to 6 GHz, and up to 64 different beams in a frequency band of 6 GHz or higher.

Two SSBs are included in one slot, and the start symbol and number of repetitions within the slot are determined according to the subcarrier spacing as follows.

Meanwhile, the SSB is not transmitted at the center frequency of the carrier bandwidth unlike the SS of typical LTE. In other words, the SSB may be transmitted even in a place other than the center of the system band. In the case of supporting wideband operation, a plurality of SSBs may be transmitted in the frequency domain. Accordingly, the UE monitors the SSB by a synchronization raster, which is a candidate frequency location for monitoring the SSB. NR newly defines the carrier raster and synchronization raster, which are the center frequency location information about the channel for initial access. The synchronization raster has a wider frequency interval than the carrier raster, enabling the UE to do a fast SSB search.

The UE may obtain the MIB through the PBCH of the SSB. The master information block (MIB) includes minimum information for the UE to receive remaining system information (remaining minimum system information (RMSI) broadcast by the network. Further, the PBCH may include information about the position of the first DM-RS symbol in the time domain, information for monitoring SIB1 by the UE (e.g., SIB1 numerology information, information related to SIB1 CORESET, search space information, PDCCH-related parameter information, etc.), offset information between the common resource block and the SSB (the absolute location of the SSB within the carrier is transmitted through SIB1), and the like. Here, the SIB1 numerology information is equally applied to some messages used in the random access procedure for the UE to access the base station after completing the cell search procedure. For example, the numerology information about SIB1 may be applied to at least one of messages 1 to 4 for the random access procedure.

The above-described RMSI may mean system information block 1 (SIB1). SIB1 is broadcast periodically (e.g., 160 ms) in the cell. SIB1 includes information necessary for the UE to perform an initial random access procedure and is periodically transmitted through the PDSCH. To receive SIB 1, the UE needs to receive numerology information used for SIB1 transmission and control resource set (CORESET) information used for SIB1 scheduling through the PBCH. The UE identifies scheduling information for SIB1 using SI-RNTI in CORESET and obtains SIB1 on PDSCH according to scheduling information. The remaining SIBs except for SIB1 may be transmitted periodically and may be transmitted at the request of the UE.

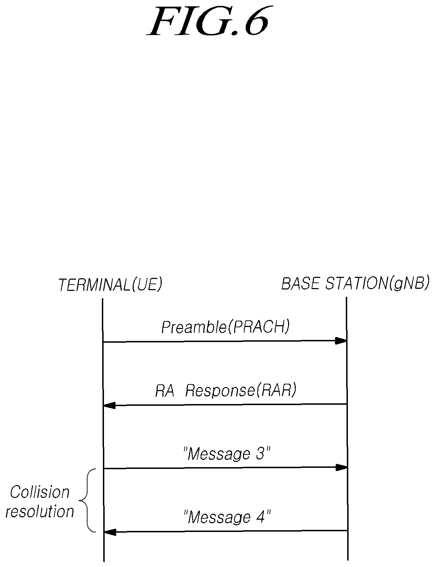

FIG. 6 is a view illustrating a random access procedure in radio access technology.

Referring to FIG. 6, if the cell search is completed, the UE transmits a random access preamble for random access to the base station. The random access preamble is transmitted through PRACH. Specifically, the random access preamble is transmitted to the base station through the PRACH composed of contiguous radio resources in a periodically repeated specific slot. In general, when the UE initially accesses the cell, a contention-based random access procedure is performed, and when random access is performed for beam failure recovery (BFR), a non-contention-based random access procedure is performed.

The UE receives a random access response to the transmitted random access preamble. The random access response may include a random access preamble identifier (ID), uplink radio resource (UL grant), temporary cell-radio network temporary identifier (C-RNTI), and time alignment command (TAC). Since one random access response may include random access response information for one or more UEs, the random access preamble identifier may be included to indicate to which UE the included UL grant, temporary C-RNTI, and TAC are valid. The random access preamble identifier may be an identifier for the random access preamble received by the base station. The TAC may be included as information for the UE to adjust uplink synchronization. The random access response may be indicated by the random access identifier on the PDCCH, that is, the random access-radio network temporary identifier (RA-RNTI).

Upon receiving a valid random access response, the UE processes information included in the random access response and performs scheduled transmissions to the base station. For example, the UE applies TAC and stores the temporary C-RNTI. Further, the UE transmits data stored in the buffer of the UE or newly generated data to the base station using the UL grant. In this case, information that may identify the UE should be included.

Finally, the UE receives a downlink message for contention resolution.

<NR CORESET>

In NR, the downlink control channel is transmitted in a control resource set (CORESET) having a length of 1 to 3 symbols and transmits uplink/downlink scheduling information, slot format index (SFI), transmit power control (TPC) information, etc.

NR introduced the concept of CORESET to secure the flexibility of the system. The control resource set (CORESET) means a time-frequency resource for a downlink control signal. The UE may use one or more search spaces in CORESET time-frequency resources to decode control channel candidates. A quasi co-location (QCL) assumption for each CORESET has been set, which is used for the purpose of indicating the characteristics of the analog beam direction in addition to the latency spread, Doppler spread, Doppler shift, and average latency, which are characteristics assumed by the conventional QCL.

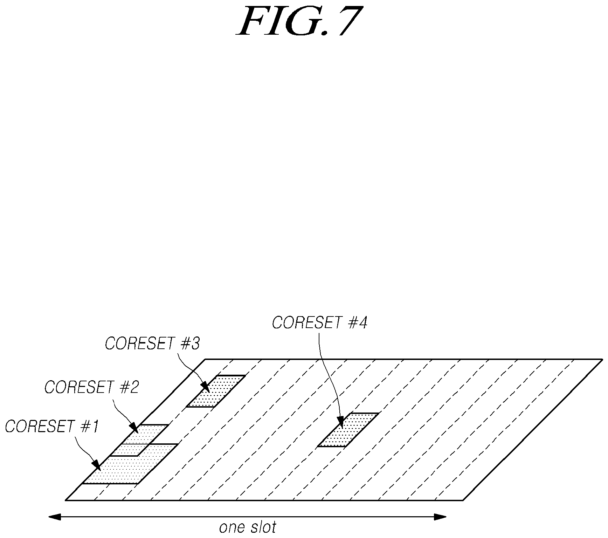

FIG. 7 is a view illustrating a CORESET.

Referring to FIG. 7, the CORESET may exist in various forms within a carrier bandwidth within one slot. In the time domain, the CORESET may be constituted of up to 3 OFDM symbols. Further, the CORESET is defined as a multiple of 6 resource blocks up to the carrier bandwidth in the frequency domain.

The first CORESET is indicated through the MIB as part of the initial bandwidth part configuration to allow additional configuration and system information to be received from the network. After connection setup with the base station, the UE may receive and configure one or more CORESET information through RRC signaling.

As used herein, the frequency, frame, subframe, resource, resource block, region, band, subband, control channel, data channel, synchronization signal, various reference signals, various signals, and various messages related to new radio (NR) may be interpreted in various meanings as currently used or to be used in the future.

## NR (New Radio)

As described above, NR has been designed to meet various QoS requirements required for each of further divided and specified use scenarios as well as an enhanced data rate as compared to LTE. In particular, as representative usage scenarios, NR defines enhancement mobile broadband (eMBB), massive MTC ( As a method for meeting the requirements for each usage scenario, NR defines a flexible frame structure as compared with LTE. Each use scenario has different requirements for data rates, latency, reliability, coverage, etc. Therefore, as a method to efficiently satisfy the requirements for each usage scenario through the frequency band constituting a NR system, it has been designed to efficiently multiplex radio resource units which are based on different numerologies (e.g., subcarrier spacing, subframe, TTI, etc.).

For example, there has been discussed a method for multiplexing and supporting numerology having different subcarrier spacings based on TDM, FDM, or TDM/FDM through one or more NR component carriers. Also discussion has been made for a scheme for supporting one or more time units in configuring a scheduling unit in the time domain. In this regard, NR defines subframe as one type of time domain structure. As reference numerology for defining the subframe duration, it has been determined to define a single subframe duration composed of 14 OFDM symbols of normal CP overhead based on 15kHz sub-carrier spacing (SCS) which is the same as that of LTE. Accordingly, in NR, the subframe has 1ms time duration. However, unlike LTE, the subframe of NR is absolute reference time duration. As a time unit which serves as a basis of actual uplink/downlink data scheduling, NR defines a slot and a mini-slot. In this case, the number (y value) of OFDM symbols constituting a corresponding slot is determined to be y=14 regardless of the SCS value in the case of normal CP.

Therefore, a slot is constituted of 14 symbols. Further, depending on the transmission direction of the corresponding slot, all the symbols may be used for DL transmission, or all the symbols may be used for UL transmission, or the symbols may be used in the form of DL portion + (gap) + UL portion.

Further, in a numerology (or SCS), a mini-slot is defined to be constituted of a smaller number of symbols than the slot. For minislot-based uplink/downlink data transmission/reception, a short-length time-domain scheduling interval may be set, or a long-length time-domain scheduling interval for uplink/downlink data transmission/reception may be configured via slot aggregation. In particular, in the case where latency-sensitive data, such as URLLC, is transmitted or received, if scheduling is performed in slot units which are based on 1ms (14 symbols) as defined in the numerology-based frame structure which has a small SCS value, e.g., 15kHz, the latency requirements may be hard to meet. Thus, a mini-slot is defined to be constituted of a smaller number of OFDM symbols than the slot constituted of 14 symbols. Based thereupon, scheduling capable of meeting the URLLC requirements may be carried out.

Meanwhile, in NR, the default scheduling unit has been changed to a slot. Further, regardless of subcarrier-spacing, the slot consists of 14 OFDM symbols. In contrast, NR supports a non-slot structure configured of 2, 4, or 7 OFDM symbols, which is a smaller scheduling unit. The non-slot structure may be utilized as a scheduling unit for URLLC service.

**<LTE V2X communication>**

In the typical LTE system, for direct communication between UEs and providing a vehicle to everything (V2X: particularly V2V) service, a radio channel and radio protocol have been designed for inter-UE direct communication (i.e., sidelink).

In relation to the sidelink, it defines PSS/SSS, which is a synchronization signal for synchronization between a wireless sidelink transmitting end and a receiving end, and physical sidelink broadcasting channel (PSBCH) for transmitting and receiving a sidelink master information block (MIB) related thereto have been defined, and physical sidelink discovery channel (PSDCH), physical sidelink control channel (PSCCH) for sidelink control information (SCI) transmission/reception, and physical sidelink shared channel (PSSCH).

Further, to allocate a radio resource for sidelink, technology has been developed separately into mode 1 in which the base station allocates a radio resource and mode 2 in which the UE selects and allocates one from a radio resource pool. Further, the LTE system required an additional technical evolution to meet the V2X scenario.

By giving the vehicle access to a mobile communication network (e.g., LTE/LTE-A), the vehicle may be connected to the Internet and to other vehicles. V2X (Vehicle to Everything) communication includes the following four types.

V2V(Vehicle to Vehicle) Communication: Communication between vehicles
V2I(Vehicle to Infrastructure) Communication: Communication between vehicle and infrastructure
V2N(Vehicle to Network) Communication: Communication between vehicle and network
V2P(Vehicle to Pedestrian) Communication: Communication between vehicle and pedestrian

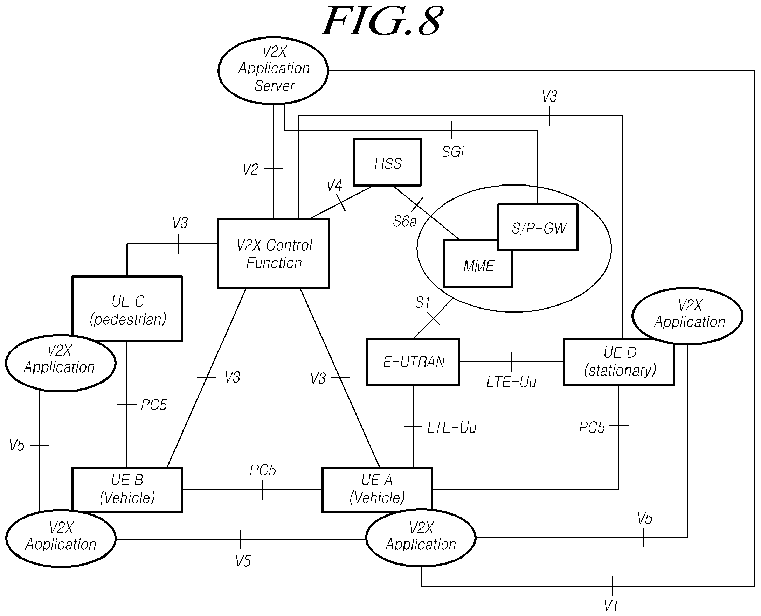

FIG. 8 is a view illustrating an architecture of a V2X communication system in an LTE system;

Referring to FIG. 8, a V2X service may be provided through a PCS interface and/or Uu interface. Support via the PCS interface was provided via V2X sidelink communication.

Specifically, various V2X communication UEs (UEs A to D) are linked through the PCS interface, and the V2X communication UE and the V2X control function are linked through the V3 interface. Further, the V2X application server and the V2X application of each V2X communication UE are linked through the V1 interface. The V2X communication UE is linked with the base station (E-UTRAN) through the Uu interface, and the base station is linked with the core network (MME and S/P GW) through the S1 interface. The MME and S/P GW are linked with the HSS through the S6a interface, and the HSS is linked with the V2X control function through the V4 interface. The core network entity is linked with the V2X application server through the SGi interface. Meanwhile, the respective V2X applications of the V2X communication UEs are linked to each other through the V5 interface.

Sidelink refers to the PCS interface specified in 3GPP TS 23.303, as an interface between UEs.

In the typical LTE system, resource allocation by the UE supporting sidelink communication supported the following modes.

Scheduled resource allocation: it requires RRC connection for data transmission. The UE requests transmission resource allocation from the base station, and the base station allocates a transmission resource for transmission of sidelink control information (SCI) and data. The UE transmits a scheduling request and following sidelink BSR to the base station. The base station schedules a transmission resource for sidelink communication using a configured SL-RNTI. For convenience of description, the resource allocation mode in which the base station allocates a sidelink resource is referred to as a first mode. This is merely for convenience of description and may be replaced with other names (sidelink Mode 1 for D2D, sidelink Mode 3 for V2X).

UE autonomous resource allocation: In this mode, the UE itself selects a resource from a pre-configured sidelink resource pool and selects a transmission format for transmission of sidelink control information and data. If a resource pool is selected, the selection is effective during the overall sidelink control period. If the period ends, the UE may reselect a resource pool. For convenience of description, the resource allocation mode in which the UE selects a sidelink resource according to a predetermined criterion from the sidelink resource pool is referred to as a second mode (sidelink Mode 2 for D2D, sidelink Mode 4 for V2X). This is so done simply for ease of description, and it may be replaced with another term.

In D2D communication such as public safety, both the modes (mode 1 and mode 2) share the same resource allocation structure. Data transmission is scheduled in a PSCCH period. A set of subframes in this period is used for physical sidelink control channel (PSCCH) transmission. Another set of subframes is used for PSSCH transmission. The PSCCH including scheduling control information for one corresponding physical sidelink shared channel (PSSCH) is transmitted always before PSSCH data.

In V2X communication, in two modes (mode 3 and mode 4), a resource allocation structure totally different from the two modes (mode 1 and mode 2) of D2D communication is used to allocate PSCCH and PSSCH. First, there is no PSCCH period to allow two physical channels (PSCCH and PSSCH) to be distributed and transmitted in different periods. The PSCCH and the PSSCH are separated in the frequency domain. In SCI format 1, PSSCH transport blocks corresponding to two identical SCIs may be transmitted in the same subframe. The transport block may be transmitted once or twice. When transmitted twice, the receiver provides combining for the redundancy version of the PSSCH transport block.

For sidelink communication when the UE is out of coverage, one set of transmission/reception resource pools for sidelink control information may be preconfigured in the UE. One set of transmission/reception resource pools for sidelink data information may be preconfigured in the UE. To be able to perform sidelink communication even when some UEs are in coverage while some UEs are out of coverage, all the UEs should be configured with a resource pool for reception sidelink control information with a union of all used resource pools to transmit sidelink control information from the serving cell, neighbor cell, and out-of-coverage (i.e., pre-configured transmission resource pools). Accordingly, the UE's power consumption increases to receive sidelink control information.

Meanwhile, the autonomous resource allocation UE performs sensing for (re)selection of sidelink resources. The UE (re)selects some specific sidelink resources. The UE reserves a plurality of sidelink resources. The UE may be allowed to perform up to two parallel and independent resource reservation processes. The UE is allowed to perform single resource selection for V2X sidelink transmission. The UE using scheduled resource allocation may be configured to perform sensing. Further, the UE ma periodically report the sensing result. The UE may perform sensing only in the sidelink transmission resource pool in which reporting is configured.

The resource pool for transmission of a pedestrian UE may overlap the resource pool for V2X sidelink communication. A resource selection mechanism may be configured for each transmission pool. For example, at least one of random selection and partial sensing-based selection may be configured. If configured to use only partial sensing-based selection, the UE may use partial sensing-based selection in a specific resource pool.

### NR V2X/NR Sidelink

3GPP has approved the NR V2X items to support advanced V2X services, such as vehicles platooning, extended sensors, advanced driving, and remote driving based on NR in Rel-16. NR V2X is not intended to replace the service provided by LTE V2X and assumes to supplement LTE V2X for enhanced V2X service and support interworking with LTE V2X. Accordingly, unlike LTE V2X which provides broadcast-based V2X basic service, NR V2X includes support for unicast mode and groupcast mode.

The NR V2X resource allocation scheme may support i) a scheduled resource allocation (first mode) in which the base station performs scheduling for communication resources between UEs and ii) a UE autonomous resource selection (second mode) scheme in which the UE autonomously selects resources from the resource pool.

In the scheduled resource allocation mode, the base station schedules transmission resources for sidelink communication through the SL-RNTI on the PDCCH. Further, the base station may allocate sidelink resources with two types of configured sidelink grants. Type 1 provides a sidelink grant where the RRC is directly configured. Type 2 may define a period of a sidelink where the RRC is configured and activate or deactivate a sidelink grant where the PDCCH is configured. For NR sidelink communication, the PDCCH is addressed to the SL-CS-RNTI.

Sidelink control information (SCI) is used for the reception UE to receive and demodulate the PSSCH. The SCI may consist of two parts. First, it may be divided into a first stage SCI (e.g., SCI format 1-A) carried on PSCCH and a second stage SCI carried on PSSCH.

SCI format 1-A is used for the PSSCH and second stage SCI scheduling transmitted on the PSSCH and may include at least one of the following information.

Priority, frequency resource assignment, time resource assignment, resource reservation period, DMRS pattern, 2nd-stage SCI format, Beta _offset indicator, Number of DMRS port, Modulation and coding scheme, Additional MCS table indicator, PSFCH overhead indication

The second stage SCI is divided into SCI format 2-A and SCI format 2-B.

SCI format 2-A may include at least one of the following information.

HARQ process number/ID, New data indicator, Redundancy version, Source ID, Destination ID, HARQ feedback enable/disable indicator, Cast type indicator, CSI request

SCI format 2-B may include at least one of the following information.

HARQ process number/ID, New data indicator, Redundancy version, Source ID, Destination ID, HARQ feedback enable/disable indicator, Zone ID, communication range requirement

Meanwhile, in the UE autonomous resource selection mode, the UE may temporarily use UE autonomous resource selection with random selection for sidelink transmission based on the configuration of the exceptional transmission resource pool. Even for NR V2X, the reception UE has a burden of continuously monitoring the sidelink reception resource pool in all resource pools for sidelink communication.

In this regard, a sidelink discontinuous reception (DRX) function is applied to reduce power consumption of the UE on the sidelink. However, no specific method has been proposed for that. In particular, since SCI is transmitted including DCI and other additional information transmitted on the Uu interface between the UE and the base station, it may be necessary to consider this to provide sidelink DRX, but no specific method has been proposed for that either.

Further, in the sidelink interface between UEs, unlike the Uu interface between the UE and the base station, the UE may perform switching on transmission and reception with different UEs through one sidelink carrier or the UE may perform switching on transmission and reception with the counterpart UE. Accordingly, when the sidelink DRX function is applied to the UE for sidelink reception, it may be preferred to consider operations on the sidelink transmission function, but no specific method has been proposed for that.

As such, in the typical V2X communication technology, there is no DRX function for saving UE power consumption in the process of transmission/reception of the sidelink UE. The disclosure introduces a DRX operation method and device for power-efficiently transmitting and receiving data considering SCI between sidelink communication UEs. Further, the disclosure introduces a method and device for power-efficiently providing sidelink transmission to a UE in association with a sidelink DRX function.

The following embodiments may be applied to sidelink communication between an NR UE and an NR UE through an NR base station. Of course, the following embodiments may be applied to sidelink communication between an NR UE and an LTE UE through an NR base station. Or, the following embodiments may also be applied to sidelink communication between an LTE UE and an LTE UE through an NR base station. Or, the following embodiments may also be applied to sidelink communication between an LTE UE and an LTE UE through an LTE base station. Or, the following embodiments may also be applied to sidelink communication between an LTE UE and an NR UE through an LTE base station. Or, the following embodiments may also be applied to sidelink communication between an NR UE and an NR UE through an LTE base station.

Meanwhile, the following embodiments may be applied to LTE UEs connected to an eLTE base station connected through a 5G system (or 5G core network). Or, the following embodiments may also be applied to E-UTRAN NR dual connectivity (EN-DC) UEs or NR E-UTRAN dual connectivity (NE-DC) UEs simultaneously providing LTE and NR wireless connections.

A base station among master base station or secondary base stations may indicate configuration information for sidelink communication. For convenience of description, the following description focuses mainly on unicast V2X communication. This is merely for convenience of description, and the present embodiments are likewise applicable to groupcast or broadcast schemes. Further, the embodiments may also be applied to any sidelink-based application (e.g., public safety, IoT, or commercial D2D) as well as sidelink-based V2X communication. For example, the present embodiments may be applied to UEs having any capability related to sidelink as well as V2X capable UEs and V2P capable UEs.

In the disclosure, a UE means a device capable of performing sidelink communication. The UE may be referred to as a first UE. A base station may mean a transmission/reception point that has an RRC connection with the UE. Further, another UE means another UE for performing sidelink communication with the UE serving as the reference for description in the disclosure, and there is no limitation on the term. Another UE may be referred to as a second UE. In other words, another UE may be described as a peer UE in that it performs sidelink communication with the reference UE. It may also be described with other various terms.

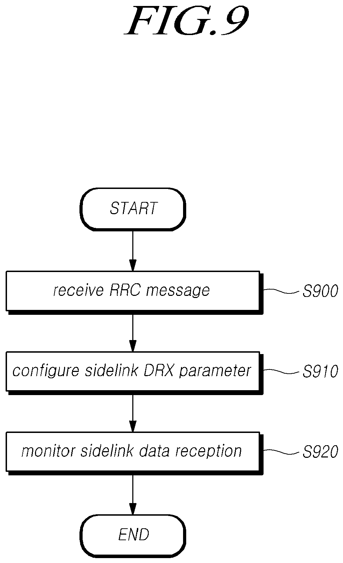

FIG. 9 is a flowchart illustrating operations of a UE according to an embodiment.

Referring to FIG. 9, a UE performing sidelink communication may perform the step of receiving a sidelink radio resource control (RRC) message from a base station or another UE (S900).

For example, the UE may receive a sidelink RRC message from the base station. The sidelink RRC message may be a sidelink RRC reconfiguration message. The sidelink RRC message may include information for configuring sidelink or sidelink DRX in the UE.

As another example, the UE may receive a sidelink RRC message from another UE. The sidelink RRC message may be a sidelink RRC reconfiguration message. The sidelink RRC message may include information for configuring sidelink or sidelink DRX in the UE. Here, the another UE may mean a UE that is peered with the UE performing or perform sidelink communication. Alternatively, the another UE may be a UE for controlling sidelink communication of the UE. Further, another UE may be referred to as a second UE, and the UE may be referred to as a first UE.

The UE may perform the step of configuring a sidelink discontinuous reception (DRX) parameter using information included in the sidelink RRC message (S910).

For example, the sidelink RRC message may include a sidelink DRX parameter. The sidelink DRX parameter may include one or more pieces of information required to perform a DRX operation while the UE performs sidelink communication.

For example, the sidelink DRX parameter may include a sidelink DRX CSI timer for receiving sidelink channel status information (CSI). As another example, the sidelink DRX parameter may further include at least one piece of information among a sidelink DRX on-duration timer to be described below, a sidelink DRX slot offset, a sidelink DRX cycle, a sidelink DRX start offset, a sidelink DRX inactivity timer, a sidelink reception DRX HARQ RTT timer, a sidelink reception DRX retransmission timer, and a sidelink transmission DRX retransmission timer. As another example, the sidelink DRX parameter may include a sidelink DRX resource reservation timer.

As such, the sidelink RRC message may include various pieces of information necessary for the UE to perform the sidelink DRX operation. Specific parameters and an operation for using the parameters are described in greater detail below for each embodiment.

Meanwhile, the sidelink DRX CSI timer may be configured to start in association with transmission of sidelink control information including a request for sidelink channel status information to the other UE. In other words, the UE may receive the sidelink RRC message, configure the sidelink DRX CSI timer, and associate the start of the sidelink DRX CSI timer with the operation of transmitting the sidelink CSI request.

Further, the sidelink DRX CSI timer may be configured to expire upon at least one event of reception of the sidelink channel status information from another UE and reaching a delay time range set for a report of the sidelink channel status information. For example, when sidelink channel status information is received while the sidelink DRX CSI timer is running, the UE may terminate (expire) the sidelink DRX CSI timer. Or, if a delay time range set for the sidelink channel status information is reached while the sidelink DRX CSI timer is running, the UE may terminate (expire) the sidelink DRX CSI timer.

The UE may perform the step of monitoring reception of sidelink data using the sidelink DRX parameter (S920).

For example, in sidelink communication, the UE may configure the sidelink DRX parameter and monitor sidelink data discontinuously. Therefore, the sidelink channel status information response according to the sidelink channel status information request should be made when the UE performs sidelink data monitoring.

Thus, the UE performs the operation of monitoring sidelink control information while the sidelink DRX CSI timer operates.

Through the above-described operations, the UE may seamlessly perform sidelink DRX operation, and unnecessary power consumption of the UE may be prevented. Further, the UE may perform operations for resource reservation, resource selection, etc. in the sidelink DRX operation situation. These operations will be described in more detail.

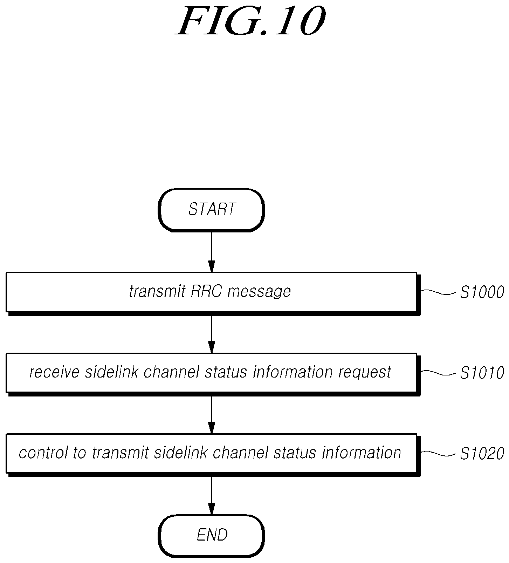

FIG. 10 is a flowchart for describing operations of another UE according to an embodiment.

Referring to FIG. 10, another UE performing sidelink communication may perform the step of transmitting a sidelink radio resource control (RRC) message to the UE (S 1000).

As described above, the sidelink RRC message may be transmitted by the base station, but the following description focuses primarily on the case of transmitting the sidelink RRC message by another UE. If the base station transmits a sidelink RRC message, another UE may also receive the corresponding RRC message from the base station.

The sidelink RRC message may be a sidelink RRC reconfiguration message. The sidelink RRC message may include information for configuring sidelink or sidelink DRX in the UE. Here, the another UE may mean a UE that is peered with the UE performing or perform sidelink communication. Alternatively, the another UE may be a UE for controlling sidelink communication of the UE.

The another UE may perform the step of receiving a request for sidelink channel status information (CSI) from the UE (S 1010).

The another UE may receive a request message requesting sidelink CSI from the UE. The request message may be included in sidelink control information. If the other UE receives the sidelink CSI request, it measures channel status information according to the request.

The another UE may perform the step of controlling to transmit sidelink channel status information while the sidelink DRX CSI timer operates in the UE (S 1020).

For example, the sidelink RRC message may include a sidelink DRX parameter. The sidelink DRX parameter may include one or more pieces of information required to perform a DRX operation while the UE performs sidelink communication.

For example, the sidelink DRX parameter may include a sidelink DRX CSI timer for receiving sidelink channel status information (CSI) of the UE. As another example, the sidelink DRX parameter may further include at least one piece of information among a sidelink DRX on-duration timer to be described below, a sidelink DRX slot offset, a sidelink DRX cycle, a sidelink DRX start offset, a sidelink DRX inactivity timer, a sidelink reception DRX HARQ RTT timer, a sidelink reception DRX retransmission timer, and a sidelink transmission DRX retransmission timer. As still another example, the sidelink DRX parameter may include a sidelink DRX resource reservation timer.

The sidelink RRC message may include various pieces of information necessary for the UE to perform the sidelink DRX operation. Specific parameters and an operation for using the parameters will be described in more detail.

Meanwhile, the sidelink DRX CSI timer may be configured to start in association with transmission of sidelink control information including a request for sidelink channel status information from the UE to the another UE. In other words, the UE may receive the sidelink RRC message, configure the sidelink DRX CSI timer, and associate the start of the sidelink DRX CSI timer with the operation of transmitting the sidelink CSI request.

Further, the sidelink DRX CSI timer may be configured to expire upon the generation of at least one event of reception of the sidelink channel status information from another UE and reaching a delay time range set for a report of the sidelink channel status information. For example, when sidelink channel status information is received while the sidelink DRX CSI timer is running, the UE may terminate (expire) the sidelink DRX CSI timer. Or, if a delay time range set for the sidelink channel status information is reached while the sidelink DRX CSI timer is running, the UE may terminate (expire) the sidelink DRX CSI timer.

Therefore, the another UE may measure the channel status according to the sidelink CSI request received from the UE and transmit the measurement result during a time period when the sidelink DRX CSI timer configured in the UE is running. For example, in performing sidelink communication, the UE may configure the sidelink DRX parameter and monitor sidelink data discontinuously. Therefore, the sidelink channel status information response according to the sidelink channel status information request should be made when the UE performs sidelink data monitoring.

Through the operation, even when DRX is applied to communication between UEs, sidelink communication, such as CSI transmission/reception, may be performed smoothly.

Each of the embodiments described below may be implemented individually or in any combination.

Method for controlling sidelink DRX operation considering reception of 2nd stage SCI

If the base station indicates and applies a sidelink DRX configuration for controlling sidelink DRX operation when the UE is in RRC connected state, the UE may allow the MAC entity to discontinuously receive the PSCCH (or SCI) for all (or one or more) sidelink carriers (or for all activated sidelink carriers or for all configured sidelink carriers).

Or, although the UE is in RRC IDLE/RRC inactive state, if the base station preconfigures the sidelink DRX configuration is preconfigured or receives the corresponding system information, the UE may allow the MAC entity to discontinuously receive the PSCCH (or SCI) for all (or one or more) sidelink carriers (or for all activated sidelink carriers or for all configured sidelink carriers).

Or, if the UE indicates or applies a sidelink DRX configuration through a sidelink RRC reconfiguration message (RRCReconfigurationSidelink) from the counterpart UE in any RRC state, the UE may allow the MAC entity to discontinuously receive the PSCCH (or SCI) for all (or one or more) sidelink carriers (or for all activated sidelink carriers or for all configured sidelink carriers).

In other cases than those described above, the UE may continuously monitor the PSCCH (or SCI).

As described above, the SCI may be divided into two stages and indicated to the UE. The UE where the sidelink DRX configuration is applied may receive/monitor the PSCCH in the active time.

According to an embodiment, if the UE receives the SCI on the PSCCH, the UE should receive/monitor the 2nd stage SCI on the PSSCH to distinguish/identify the corresponding DRX configuration. The UE may distinguish/identify the corresponding DRX configuration through one or more pieces of information among the HARQ process number/ID, New data indicator, Redundancy version, Source ID, Destination ID, HARQ feedback enable/disable indicator, Cast type indicator 및 CSI request included in the 2nd stage SCI.

For sidelink unicast mode, a sidelink DRX configuration may be configured every pair of source (departure point) and destination. The UE that sent the DRX configuration out of coverage may determine the DRX configuration. For sidelink unicast mode, a plurality of DRX configurations may be indicated and applied to the UE.

For sidelink groupcast and broadcast mode, sidelink DRX configuration may be configured through one piece of common configuration information. In coverage, the RRC idle/RRC inactive/RRC connected transmission UE and reception UE may obtain the DRX configuration through SIB. Out of coverage, the transmission UE and the reception UE may obtain the DRX configuration through preconfiguration. For sidelink groupcast and broadcast modes, a plurality of DRX configurations may be indicated and applied to the UE.

The source L2 ID identifies the sender of data in NR sidelink communication. The source L2 ID is 24 bits long and is split into two bit strings at the MAC layer. The first bit string is the LSB part (8 bits) of the source L2 ID and is forwarded to the sender's physical layer. The first bit string identifies the source of the intended data within the sidelink control information (SCI). The first bit string is used for packet filtering in the physical layer of the receiver. The second bit string is the MSB part (16 bits) of the source L2 ID and is carried in the MAC header. The second bit string is used for packet filtering at the receiver's MAC layer.

The destination L2 ID identifies the target of data in NR sidelink communication. The destination L2 ID is 24 bits long and is split into two bit strings at the MAC layer. The first bit string is the LSB part (16 bits) of the destination L2 ID and is forwarded to the sender's physical layer. The first bit string identifies the target of the intended data within the sidelink control information (SCI). The first bit string is used for packet filtering in the physical layer of the receiver. The second bit string is the MSB part (8 bits) of the destination L2 ID and is carried in the MAC header. The second bit string is used for packet filtering at the receiver's MAC layer.

According to another embodiment, if the UE receives the SCI on the PSCCH, the UE should receive/monitor the 2nd stage SCI on the PSSCH to distinguish/identify the corresponding DRX configuration. Or, the UE should receive/monitor the 2nd stage SCI to decode/process the PSSCH.

One or more DRX configurations may be indicated and applied to UE for each cast type. Or, for sidelink unicast, a sidelink DRX configuration may be configured every pair of source and destination. Or, one or more sidelink DRX configurations may be indicated and applied to a pair of source and destination for sidelink unicast. The 2nd stage SCI information may be received/monitored/decoded on the PSSCH through the 1st stage SCI information. The UE may control the operation of the DRX parameter applied through the corresponding DRX configuration through information included in the 2nd stage SCI.

The sidelink DRX parameter may include one or more of the following parameters.

Sidelink discontinuous reception (DRX) on-duration timer: indicates duration information at the start of the DRX cycle in the sidelink

Sidelink DRX (slot) offset: indicates the delay before starting the sidelink DRX on-duration timer. For example, the sidelink DRX on-duration timer may start at (after) a fixed offset from a specific time based on the sync source of the UE.

Sidelink DRX cycle: indicates sidelink DRX cycle information. Sidelink long/short DRX cycles may be included. The short DRX cycle may or may not be used selectively and only the long DRX cycle may be used.

Sidelink DRX start offset: indicates offset information defining the subframe/slot in which the sidelink DRX cycle starts.

Sidelink discontinuous reception inactivity timer: indicates duration information after PSCCH/PSSCH occasion (or PSCCH/PSSCH period or PSCCH/PSSCH reception time) where the SCI indicates new sidelink transmission for the corresponding UE for the MAC entity. Or it indicates duration information after PSCCH occasion (or PSCCH/SCI reception time) where the PSCCH indicates new sidelink transmission for the MAC entity Or it indicates duration information after the PSSCH occasion (or PSSCH period or PSSCH reception time) where the 2nd SCI indicates new sidelink transmission on the PSSCH for the MAC entity.

Sidelink reception discontinuous reception HARQ RTT timer (referred to as drx-HARQ-RTT-TimerRX-SL for convenience of description): indicates minimum duration information until before reception SCI for HARQ retransmission is expected by the MAC entity. The corresponding timer may be operated for each SL reception HARQ process.

Sidelink reception discontinuous transmission HARQ RTT timer (referred to as drx-HARQ-RTT-TimerTX-SL for convenience of description): indicates minimum duration information until before grant [or SCI (e.g., when scheduling is indicated by the UE) or DCI (e.g., when scheduling is indicated by the base station)] for transmission HARQ retransmission is expected by the MAC entity. The corresponding timer may be operated for each SL transmission HARQ process.

Sidelink reception discontinuous reception retransmission timer (referred to as drx-RetransmissionTimerRX-SL for convenience of description): indicates maximum duration information until sidelink retransmission is received. The corresponding timer may be operated for each SL reception HARQ process.

Sidelink transmission discontinuous retransmission timer (referred to as drx-RetransmissionTimerTX-SL for convenience of description): indicates maximum duration information until grant [or SCI (e.g., when scheduling is indicated by the UE) or DCI (e.g., when scheduling is indicated by the base station)] for sidelink retransmission is received. The corresponding timer may be operated for each SL transmission HARQ process.

When a sidelink DRX cycle is configured, active time for sidelink carrier(s)/resource pool(s) (within one DRX group) may be defined, including one or more of the following.

When the sidelink DRX on-duration timer or sidelink DRX inactivity timer is running

When the sidelink transmission DRX retransmission timer or sidelink reception DRX retransmission timer is running

If any sidelink DRX parameter is configured, the UE (MAC entity) may operate as follows for the DRX configuration.

1>If the DRX configuration/DRX group is in active time,

2>Monitor PSCCH/SCI in the corresponding DRX configuration/DRX group. Or, monitors 1st stage SCI on PSCCH and/or 2nd stage SCI on PSSCH.

2>If PSCCH/SCI indicates (new) sidelink transmission (or if meeting one or more of indicating (new) sidelink transmission for the corresponding UE through 1st stage SCI on PSCCH and 2nd stage SCI on PSSCH, including source/destination L1 ID to be received (intended) by the UE through 2nd stage SCI, including source/destination L2 ID to be received (intended) by the UE on the MAC header, and including the cast type to be received (intended) by the UE).

3>Starts/restarts the sidelink DRX inactivity timer in the first symbol after the end of the PSSCH (e.g., the last PSSCH symbol). Or starts/restarts the sidelink DRX inactivity timer in the first symbol after the end of the PSSCH including the 2nd stage SCI. Or, starts/restarts the sidelink DRX inactivity timer in the first symbol after the end of the PSCCH.

1>If the sidelink DRX inactivity timer expires:

2> PSCCH/SCI may be monitored discontinuously. Or, PSCCH monitoring may be skipped. Or, SCI monitoring may be skipped. Or 1st stage SCI on PSCCH and 2nd stage SCI on PSSCH monitoring may be skipped.

$$1>[(SFN \text{ X } 10) + \text{subframe number}] \text{ modulo (sidelink drx-Cycle)} = \text{sidelink drx-StartOffset}$$

2>start sidelink drx-onDurationTimer after drx-SlotOffset from the beginning of the subframe.

Method for defining parameter for controlling sidelink DRX operation according to CSI request

The sidelink CSI reporting procedure is used to provide sidelink channel status information to the counterpart UE. For convenience of description, a case in which a sidelink transmission UE receives a CSI report from a sidelink reception UE is described. The transmission UE may indicate the delay time range (sl-LatencyBoundCSI-Report) for the sidelink CSI report to the reception UE through the RRC reconfiguration message (RRCReconfigurationSidelink). For example, the delay time range may be configured within 3 to 160 slots. If the reception UE receives the CSI request, the reception UE may measure the sidelink CSI within the configured delay time range and transmit the measurement result (sidelink CSI report) to the transmission UE that sent the CSI request. If the transmission UE transmits a CSI request to the reception UE through SCI, the transmission UE may expect to receive CSI reporting from the reception UE within the above-described delay time range. If sidelink DRX is operated in the transmission UE, and if the time at which the reception UE is to transmit CSI reporting corresponds to the sidelink DRX inactive time of the transmission UE, the transmission UE may not receive the CSI reporting even when the reception UE transmits it. To address this issue, the following method may be used.

For example, if the transmission UE transmits the SCI including the CSI request to the reception UE, the transmission UE may define and start a timer for including as an active time on the sidelink DRX. For convenience of description, this is denoted as a sidelink DRX CSI timer. This is merely for convenience of description and it may be replaced with any other term.

If the transmission UE transmits the SCI including the CSI request to the reception UE, the MAC entity receiving the same from the physical layer starts/restarts the sidelink DRX CSI timer. If a specific period/duration/offset for CSI measurement is to be set, the corresponding timer may be started/restarted after the period/duration/offset. If the transmission UE receives CSI reporting (CSI response), the transmission UE may stop the sidelink DRX CSI timer. For example, if the sidelink CSI reporting MAC CE is received, the transmission UE may stop the sidelink DRX CSI timer. The sidelink DRX CSI timer may have the same value as the delay time range for the above-described sidelink CSI report. While the sidelink DRX CSI timer is running, it may be included in the active time for monitoring the PSCCH (or SCI).

As another example, if the transmission UE operating the sidelink DRX transmits the SCI including the CSI request to the reception UE, the reception UE may transmit the sidelink CSI reporting (e.g., sidelink CSI reporting MAC CE) according to any active time on the sidelink DRX of the transmission UE. For example, the reception UE may transmit sidelink CSI reporting (e.g., the sidelink CSI reporting MAC CE) while the sidelink DRX on-duration timer (or the sidelink DRX inactivity timer) operates.

If the sidelink CSI reporting is triggered by the SCI and is not canceled, if the reception UE (MAC entity of the reception UE) has a sidelink resource allocated for new transmission, the corresponding sidelink resource corresponds to any active time of the transmission/counterpart UE, the sidelink shared channel (SL-SCH) resource may accommodate the sidelink reporting MAC CE and its subheader, if it has the sidelink resource, the multiplexing and assembly processor is indicated to generate the sidelink CSI reporting MAC CE. If the corresponding resource does not correspond to any active time of the transmission/counterpart UE, the CSI reporting MAC CE may be generated and transmitted to the transmission/counterpart UE at a time belonging to any active time before the sidelink CSI report timer expires.

Method for operating with CSI request associated with sidelink DRX parameter

It is preferable that the reception UE operating the sidelink DRX maintains the active time when PSCCH/PSSCH transmission through the resource reserved by the transmission UE is expected. To that end, the reception UE may process a time during which CSI reporting reception is expected according to the CSI request in association with the sidelink DRX timer included in the active time for the corresponding sidelink carrier (cell/PC-5 RRC connection/cast type) in one sidelink DRX configuration (or sidelink DRX group).

When the sidelink DRX cycle is configured, the active time for the sidelink carrier/cell/PC-5 RRC/cast type in one sidelink DRX configuration (or sidelink DRX group) may include one or more of the following times.

- While the sidelink DRX on-duration timer is running
- While sidelink DRX inactivity timer is running
- While sidelink DRX retransmission timer is running

Hereinafter, a method of processing in association with a sidelink DRX inactivity timer will be described. This is only for convenience of description, and it is also included in the scope of the embodiments to link and process any sidelink DRX timer included in the above-described active time.

If the UE transmits the SCI including the CSI request to the counterpart UE, the MAC entity of the UE instructed to transmit the SCI including the CSI request from the physical layer starts/restarts the sidelink DRX inactivity timer. For example, if the PSCCH/CSI including the CSI request is transmitted, the UE starts/restarts the sidelink DRX inactivity timer in the first symbol after the end of the corresponding PSCCH transmission. As another example, if the PSCCH/CSI including the CSI request is transmitted, the UE starts/restarts the sidelink DRX inactivity timer in the first symbol after the specific period/duration/offset after the end of the PSCCH transmission.

Method for defining parameter for controlling sidelink DRX operation according to resource reservation

While the reception UE performs the DRX function for sidelink reception, when the transmission UE that has established the PC5-RRC connection to the UE operates in the UE autonomous resource allocation mode (resource allocation second mode), the transmission UE may (re)select some specific sidelink resources. The UE may reserve a plurality of sidelink resources. Resource reservation provides the effect of reducing the possibility of collision when performing sidelink communication.

A resource selection mechanism may be configured for each transmission pool. For example, one of a random selection, a partial sensing-based selection, and a full sensing-based selection may be configured. In order to allow the transmission data of the (transmission) UE to be received by the counterpart (reception) UE in which the DRX function is running using the reserved resource, the resource reserved by the (transmission) UE should be included in the active time of the counterpart (reception) UE and the data should be transmitted. If the sidelink DRX is operated in the reception UE and the time corresponding to the resource reserved by the transmission UE corresponds to the sidelink DRX inactive time of the reception UE, the reception UE may not receive the PSCCH/PSSCH even if the transmission UE transmits the PSCCH/PSSCH using the reserved resource. To address this issue, the following method may be used.

For example, when it is expected that PSCCH/PSSCH is transmitted through a resource reserved by the transmission UE, the reception UE may define and start a timer to be included as an active time on the sidelink DRX. For convenience of description, this is denoted as a DRX resource reservation timer. This is merely for convenience of description and it may be replaced with any other term.

First, it is described from the perspective of the transmission UE. If the transmission UE (the MAC entity of the transmission UE) selects to generate the selected sidelink grant corresponding to the plurality of MAC PDUs and the sidelink data is available on one logical channel, the transmission UE selects a resource pool if the transmission UE does not have a selected resource pool allowed on the logical channel. The transmission UE may perform TX resource (re)selection check on the selected resource pool. If the TX resource (re)selection is triggered as a result of the TX resource (re)selection check, the transmission UE selects an allowed value configured by the RRC in the sidelink resource reservation period list. The transmission UE may set a resource reservation interval as a selected value. The transmission UE may randomly select time and frequency resources from the resources indicated by the physical layer. Or, the transmission UE may randomly select a time and frequency resource for one transmission occasion from the resource indicated by the physical layer. Or, the transmission UE may randomly select time and frequency resources for one or more transmission occasions from available resources according to the selected time/frequency resources. A randomly selected resource may be used to select one set of periodic resources spaced apart by a resource reservation interval for transmission of the PSCCH and the PSSCH corresponding to the number of transmission occasions of the MAC PDU. The transmission UE transmits the SCI including the resource reservation period/interval.

Next, it will be described from the perspective of the reception UE. If the transmission UE transmits the SCI including the resource reservation period to the reception UE, the reception UE (the MAC entity of the reception UE) receiving the same from the physical layer) starts/restarts the sidelink DRX resource reservation timer. If a specific period/duration/offset for resource reservation timer is to be set, the corresponding timer may be started/restarted after the period/duration/offset. Or, the sidelink DRX resource reservation timer may be started/restarted after a predetermined period/duration/offset/number of slots in the resource reservation period. The corresponding period/duration/offset/number of slots may be set to a value less than the resource reservation period. If the transmission UE transmits an SCI (or an SCI having a resource reservation period of 0 or without resource reservation) that does not include a resource reservation period to the reception UE, the reception UE (the MAC entity of the reception UE) that receives the SCI from the physical layer stops the sidelink DRX resource reservation timer. If the transmission UE does not transmit the PSCCH/PSSCH in the next resource reservation period, the reception UE (the MAC entity of the reception UE) stops the sidelink DRX resource reservation timer. While the sidelink DRX resource reservation timer is running, it may be included in the active time for monitoring the PSCCH (or SCI).

As another example, when the transmission UE transmits the SCI including the resource reservation period to the reception UE, the transmission UE may determine the resource reservation period according to the period in which any active time arrives on the sidelink DRX of the reception UE. For example, the transmission UE may determine and transmit the resource reservation period with the same value as the DRX cycle or any multiple values.

Method for operating with resource reservation period associated with sidelink DRX parameter if the resource reservation period is received

It is preferable that the reception UE maintains the active time when PSCCH/PSSCH transmission through the resource reserved by the transmission UE is expected. To that end, the reception UE may process the resource reservation period in association with the sidelink DRX timer included in the active time for the corresponding sidelink carrier (cell/PC-5 RRC connection/cast type) in one sidelink DRX configuration (or sidelink DRX group).

When the sidelink DRX cycle is configured, the active time for the sidelink carrier/cell/PC-5 RRC/cast type in one sidelink DRX configuration (or sidelink DRX group) may include one or more of the following times.

- While the sidelink DRX on-duration timer is running
- While sidelink DRX inactivity timer is running
- While sidelink DRX retransmission timer is running

Hereinafter, a method of processing in association with a sidelink DRX inactivity timer is described. This is only for convenience of description, and it is also included in the scope of the embodiments to link and process any sidelink DRX timer included in the active time.

If the transmission UE transmits the SCI including the resource reservation period to the reception UE, the reception UE (the MAC entity of the reception UE) receiving the resource reservation period from the physical layer starts/restarts the sidelink DRX inactivity timer. For example, if the PSCCH indicates new transmission, the reception UE starts/restarts the sidelink DRX inactivity timer in the first symbol after the end of the PSCCH reception. As another example, if the PSCCH indicates the resource reservation period (or a non-zero resource reservation period), the reception UE starts/restarts the sidelink DRX inactivity timer at the next resource reservation period/interval. As another example, if the PSCCH indicates the resource reservation period (or a non-zero resource reservation period), the reception UE starts/restarts the sidelink DRX inactivity timer in the first (or nth, where n may be indicated or preset as an arbitrary natural number by the UE) symbol after the end of PSCCH reception and before the next resource reservation period/interval.

Through the above-described operations, sidelink communication may be efficiently performed. Meanwhile, more various embodiments for efficiently performing sidelink communication are described below. The embodiments described below may be implemented independently or through any combination with the above-described embodiments.

Definitions of sidelink DRX parameters and basic operations

The sidelink DRX parameter may include various information and detailed parameters as described above. Specific sidelink DRX parameters described above are omitted from the description.

When the sidelink DRX is configured, the MAC entity may operate as follows.

1>If one MAC PDU is transmitted in one configured sidelink grant:

2>Sidelink reception drx-HARQ-RTT-Timer for the corresponding HARQ process starts. At this time, the start point may be the first symbol after the end of the first repetition of the corresponding PSSCH (or PSCCH) transmission. Or, the start point may be the first symbol after the end of the corresponding PSSCH (or PSCCH) transmission. Or, it may be any point in time.
2>the sidelink reception drx-RetransmissionTimer for the corresponding HARQ process stops.

1>If sidelink reception drx-HARQ-RTT-Timer expires:
2>If the corresponding HARQ process is not successfully decoded:
3>the sidelink reception drx-RetransmissionTimer for the corresponding HARQ process starts. In this case, the start point may be the first symbol after expiration of the reception drx-HARQ-RTT-Timer. Or, it may be any point in time.
1>If sidelink transmission drx-HARQ-RTT-Timer expires:
2>the sidelink transmission drx-RetransmissionTimer for the corresponding HARQ process starts. In this case, the start point may be the first symbol after expiration of the transmission drx-HARQ-RTT-Timer. Or, it may be any point in time.

If the sidelink DRX inactivity timer and the sidelink short cycle are configured, the following operations may be performed.

1>If the sidelink DRX inactivity timer expires:

2>If a sidelink short cycle is configured:

3>The sidelink short cycle timer (the duration the UE shall follow the Short DRX cycle) starts or restarts. In this case, the start point may be the first symbol after expiration of the corresponding sidelink DRX inactivity timer. Or, it may be any point in time.
3>The sidelink short DRX cycle is used.

2>Otherwise
3>The sidelink long DRX cycle is used.

1>If the sidelink short DRX cycle is used, [(SFN X 10) + subframe number] modulo (sidelink drx-ShortCycle) = (sidelink drx-StartOffset) modulo (drx-ShortCycle):
2>start sidelink drx-onDurationTimer after drx-SlotOffset from the beginning of the subframe.
1>If the sidelink long DRX cycle is used, [(SFN X 10) + subframe number] modulo (drx-LongCycle) = drx-StartOffset:
2>The sidelink DRX on-duration timer starts after the sidelink DRX slot offset from the start of that subframe.

Operations according to a basic sidelink DRX parameter configuration have been described above. Association between resource selection and DRX operation will be described below.

Method for associating resource selection of transmission UE with sidelink DRX operation of counterpart reception UE

As described above, unlike the Uu interface between the UE and the base station, the sidelink interface between the UEs, may perform communication through one sidelink carrier by switching transmission/reception with different UEs . Or, the UE may perform communication by switching transmission and reception with a specific counterpart UE. Therefore, it is necessary to consider an operation on the sidelink transmission function when applying the sidelink DRX function to the UE to receive the sidelink.
While the UE performs the sidelink DRX function, the UE (e.g., the UE autonomous resource allocation UE) may perform sensing to (re)select the sidelink resource. The UE may (re)select some specific sidelink resources. The UE may reserve a plurality of sidelink resources. A resource selection mechanism may be configured for each transmission pool. For example, one of a random selection, a partial sensing-based selection (e.g., monitoring a subset of a full sensing window), and a full sensing-based selection may be configured. Random selection may (re)select resources without sensing. In the resource selection window, all resources may be selected with the same probability. In partial sensing, sensing may be performed within one or a plurality of short time windows. The position of the sensing window, the position of the selection window, the step size, and the like may be indicated through the RRC configuration.
While the counterpart UE performs the DRX function for sidelink reception, the paired UE (e.g., the UE autonomous resource allocation UE) may perform sensing to (re)select the sidelink resource. The paired UE may (re)select some specific sidelink resources. The paired UE may reserve a plurality of sidelink resources. A resource selection mechanism may be configured for each transmission pool. For example, one of a random selection, a partial sensing-based selection, and a full sensing-based selection may be configured. In order for the data transmission of the (transmission) UE through the sidelink interface to be received by the counterpart (reception) UE in which the DRX function is running, the (transmission) UE needs to transmit data during the active time of the counterpart (reception) UE.
For example, while the sidelink DRX on-duration timer of the (reception) UE is running, the (transmission) UE may be restricted to (re)select the resources. To that end, the corresponding sidelink DRX configuration may be associated with the resource pool. Each resource pool may be associated with at least one of a random selection, a partial sensing-based selection, and a full sensing-based selection.
If the MAC entity of the (transmission) UE selects to generate the selected sidelink grant corresponding to the plurality of MAC PDUs and the sidelink data is available in one logical channel, TX resource (re)selection check may be performed on the selected resource pool.
If the TX resource (re)selection is triggered as a result of the TX resource (re)selection check of the (transmission) UE, the time and frequency resources may be randomly selected from the resources indicated by the physical layer. Or, the transmission UE may randomly select a time and frequency resource for one transmission occasion from the resource indicated by the physical layer. Or, the transmission UE may randomly select time and frequency resources for one or more transmission occasions from available resources according to the selected time/frequency resources.
The corresponding time resource may be randomly selected from time resources included in the time when the sidelink DRX on-duration timer operates. For example, the time resource may be selected from among time resources included in the time obtained by adding the sidelink DRX on-duration timer value from the sidelink DRX slot offset from the start of the subframe (slot) to [(SFN X 10) + subframe number] modulo (drx-LongCycle) = drx-StartOffset. Here, the subframe may be a slot. Or, if the sidelink DRX on-duration timer expires, the selected sidelink grant/resource may be released/discarded/removed/cleared. TX resource (re)selection [or (re)selection check] may be performed on the selected resource pool.

As another example, while the sidelink DRX inactivity timer of the (reception) UE is running, the (transmission) UE may be restricted to (re)select resources. To that end, the corresponding sidelink DRX configuration may be associated with the resource pool. Each resource pool may be associated with at least one of a random selection, a partial sensing-based selection, and a full sensing-based selection.

If the MAC entity of the (transmission) UE selects to generate the selected sidelink grant corresponding to the plurality of MAC PDUs and the sidelink data is available in one logical channel, TX resource (re)selection check may be performed on the selected resource pool.

If the TX resource (re)selection is triggered as a result of the TX resource (re)selection check of the (transmission) UE, the time and frequency resources may be randomly selected from the resources indicated by the physical layer. Or, the transmission UE may randomly select a time and frequency resource for one transmission occasion from the resource indicated by the physical layer. Or, the transmission UE may randomly select time and frequency resources for one or more transmission occasions from available resources according to the selected time/frequency resources.

The corresponding time resource may be randomly selected from time resources included in the time when the sidelink DRX inactivity timer operates. Or, if the sidelink DRX inactivity timer expires, the selected sidelink grant/resource may be released/discarded/removed/cleared. TX resource (re)selection [or (re)selection check] may be performed on the selected resource pool.

As another example, while the sidelink transmission DRX retransmission timer or sidelink reception DRX retransmission timer of the (reception) UE is running, the (transmission) UE may be restricted to (re)select resources. To that end, the corresponding sidelink DRX configuration may be associated with the resource pool. Each resource pool may be associated with at least one of a random selection, a partial sensing-based selection, and a full sensing-based selection.

If the MAC entity of the (transmission) UE selects to generate the selected sidelink grant corresponding to the plurality of MAC PDUs and the sidelink data is available in one logical channel, TX resource (re)selection check may be performed on the selected resource pool.

If the TX resource (re)selection is triggered as a result of the TX resource (re)selection check of the (transmission) UE, the time and frequency resources may be randomly selected from the resources indicated by the physical layer. Or, the transmission UE may randomly select a time and frequency resource for one transmission occasion from the resource indicated by the physical layer. Or, the transmission UE may randomly select time and frequency resources for one or more transmission occasions from available resources according to the selected time/frequency resources.

The corresponding time resource may be randomly selected from time resources included in the time when the sidelink transmission DRX retransmission timer or sidelink reception DRX retransmission timer is running. Or, if the sidelink transmission DRX retransmission timer or sidelink reception DRX retransmission timer expires, the selected sidelink grant/resource may be released/discarded/removed/cleared. TX resource (re)selection [or (re)selection check] may be performed on the selected resource pool.

Method for associating sidelink DRX operation with sidelink resource reservation period

While the counterpart UE performs the DRX function for sidelink reception, the paired UE (e.g., the UE autonomous resource allocation UE) may perform sensing to (re)select the sidelink resource. The paired UE may (re)select some specific sidelink resources. The paired UE may reserve a plurality of sidelink resources. A resource selection mechanism may be configured for each transmission pool. For example, at least one of a random selection, a partial sensing-based selection, and a full sensing-based selection may be configured. In order for the data transmission of the (transmission) UE through the sidelink interface to be received by the counterpart (reception) UE in which the DRX function is running, the (transmission) UE needs to transmit data so that the resource reserved by the (transmission) UE is included in the active time of the counterpart (reception) UE. Otherwise, the UE may consider the reserved resource to be invalid.

For example, the (transmission) UE may be restricted to reserve resources according to the period/cycle when the sidelink DRX on-duration timer of the (reception) UE is running. To that end, the corresponding sidelink DRX configuration may be associated with the resource pool. Each resource pool may be associated with at least one of a random selection, a partial sensing-based selection, and a full sensing-based selection.

If the MAC entity selects to generate the selected sidelink grant corresponding to the plurality of MAC PDUs and the sidelink data is available in one logical channel, TX resource (re)selection check may be performed on the selected resource pool.

If the TX resource (re)selection is triggered as a result of the TX resource (re)selection check, an allowed value configured by the RRC in the sidelink resource reservation period list may be selected. A resource reservation interval may be set as a selected value. A value for a resource reservation interval included in the resource reservation period list may be indicated in association with a DRX cycle value. For example, it may be composed of the same value as the DRX cycle or an arbitrary multiple.

Time and frequency resources may be randomly selected from the resources indicated by the physical layer. Or, a time and frequency resource for one transmission occasion may be randomly selected from the resource indicated by the physical layer. Or, a time and frequency resources for one or more transmission occasions may be randomly selected from available resources according to the selected time/frequency resources.

A randomly selected resource may be used to select one set of periodic resources spaced apart by a resource reservation interval for transmission of the PSCCH and the PSSCH.

The resource may be randomly selected from among resources included in the time when any of the above-described sidelink DRX parameters (e.g., sidelink DRX on-duration timer) operates.

### Method for associating the position of sensing window, position of selection window, and step size with DRX parameters

While the counterpart UE performs the DRX function for sidelink reception, the paired UE (e.g., the UE autonomous resource allocation UE) may perform sensing to (re)select the sidelink resource. The paired UE may perform partial sensing during the active time or from a predetermined offset before the active time and (re)select a specific sidelink resource. The paired UE may reserve a plurality of sidelink resources.

In full sensing or partial sensing, sensing may be configured to be performed within one or a plurality of short time windows. Partial sensing may be configured such that sensing is performed on a subset of a full sensing window. The position of the sensing window, the position of the selection window, the step size, and the like may be indicated through the RRC configuration.

One or more parameters among the position of the sensing window, the position of the selection window, and the step size may be configured in association with any DRX parameter. For example, while the sidelink DRX on-duration timer of the (reception) UE is running, the (transmission) UE may be configured to perform sensing. As another example, the (transmission) UE may be configured to start sensing when the sidelink DRX on-duration timer of the (reception) UE starts (or a predetermined offset before the timer starts). As another example, the (transmission) UE may be configured to stop/pause sensing when the sidelink DRX on-duration timer of the (reception) UE stops/expires (or a predetermined offset before the timer). For convenience of description, the description focuses on the sidelink DRX on-duration timer, but use of any sidelink DRX parameter falls within the category of the present embodiments.

The above-described embodiments may be applied to unicast-based sidelink communication that supports one PC5-RRC connection for one pair of source L2 ID and destination L2 ID in the access stratum (AS). Any parameters described above may be indicated and applied from one UE to the counterpart UE through the sidelink RRC reconfiguration message. The PC5-RRC connection is a logical connection between two UEs for one pair of source L2 ID and destination L2 ID, and may be established after the PC5 unicast link is established.

The above-described operation may also be applied to groupcast-based sidelink communication for transmitting and receiving user traffic through a sidelink among UEs belonging to one group. It may also be applied to broadcast-based sidelink communication that transmits and receives user traffic through a sidelink among the above-described UEs.

According to the disclosure, sidelink communication may be performed power-efficiently.

Hereinafter, configurations of a UE and another UE paired therewith capable of performing all or some of the above-described embodiments will be described with reference to the accompanying drawings.

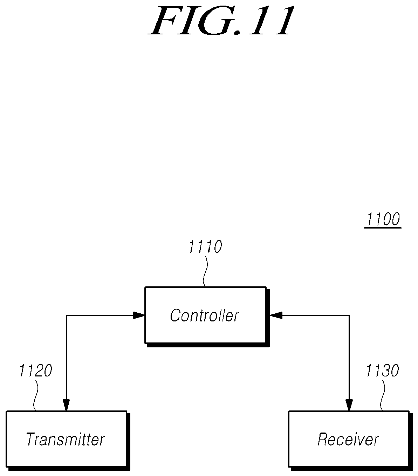

FIG. 11 is a block diagram for describing a UE according to an embodiment.

Referring to FIG. 11, a UE 1100 performing sidelink communication includes a receiver 1130 receiving a sidelink radio resource control (RRC) message from a base station or another UE, and a controller 1110 configuring a sidelink discontinuous reception (DRX) parameter using information included in the sidelink RRC message and monitoring reception of sidelink data using the sidelink DRX parameter.

For example, the receiver 1130 may receive a sidelink RRC message from the base station. The sidelink RRC message may be a sidelink RRC reconfiguration message. The sidelink RRC message may include information for configuring sidelink or sidelink DRX in the UE.

As another example, the receiver 1130 may receive a sidelink RRC message from another UE. The sidelink RRC message may be a sidelink RRC reconfiguration message. The sidelink RRC message may include information for configuring sidelink or sidelink DRX in the UE.

For example, the sidelink RRC message may include a sidelink DRX parameter. The sidelink DRX parameter may include one or more pieces of information required to perform a DRX operation while the UE performs sidelink communication.

For example, the sidelink DRX parameter may include a sidelink DRX CSI timer for receiving sidelink channel status information (CSI). As another example, the sidelink DRX parameter may further include at least one piece of information among a sidelink DRX on-duration timer to be described below, a sidelink DRX slot offset, a sidelink DRX cycle, a sidelink DRX start offset, a sidelink DRX inactivity timer, a sidelink reception DRX HARQ RTT timer, a sidelink reception DRX retransmission timer, and a sidelink transmission DRX retransmission timer as described above. As another example, the sidelink DRX parameter may include a sidelink DRX resource reservation timer.

Meanwhile, the sidelink DRX CSI timer may be configured to start in association with transmission of sidelink control information including a request for sidelink channel status information to the other UE. In other words, the controller 1110 may receive the sidelink RRC message, configure the sidelink DRX CSI timer, and associate the start of the sidelink DRX CSI timer with the operation of transmitting the sidelink CSI request.

Further, the sidelink DRX CSI timer may be configured to expire upon the generation of at least one event of reception of the sidelink channel status information from another UE and reaching a delay time range set for a report of the sidelink channel status information. For example, when sidelink channel status information is received while the sidelink DRX CSI timer is running, the controller 1110 may terminate (expire) the sidelink DRX CSI timer. Or, if a delay time range set for the sidelink channel status information is reached while the sidelink DRX CSI timer is running, the controller 1110 may terminate (expire) the sidelink DRX CSI timer.

In performing sidelink communication, the controller 1110 may configure the sidelink DRX parameter and monitor sidelink data discontinuously. Therefore, the sidelink channel status information response according to the sidelink channel status information request should be made when the UE performs sidelink data monitoring. Thus, the controller 1110 performs the operation of monitoring sidelink control information while the sidelink DRX CSI timer operates.

Besides, the controller 1110 controls the overall operation of the UE 1100 according to performing sidelink communication through the DRX operation necessary for performing the above-described embodiments.

The transmitter 1120 and the receiver 1130 are used to transmit or receive signals or messages or data necessary for performing the above-described embodiments, with a base station or another UE.

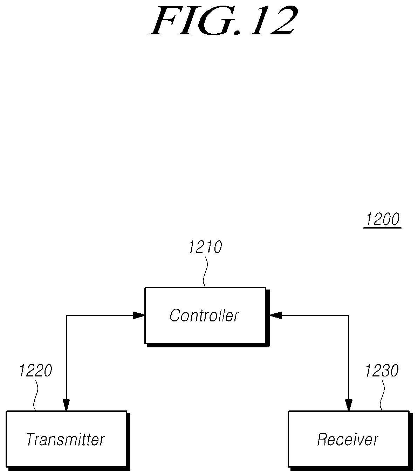

FIG. 12 is a block diagram illustrating another UE according to an embodiment.

Referring to FIG. 12, another UE 1200 performing sidelink communication includes a transmitter 1220 transmitting a sidelink radio resource control (RRC) message to a UE, a receiver 1230 receiving a sidelink channel status information (CSI) request from the UE, and a controller 1210 controlling to transmit the sidelink channel status information while a sidelink DRX CSI timer operates in the UE.

The sidelink RRC message may be a sidelink RRC reconfiguration message. The sidelink RRC message may include information for configuring sidelink or sidelink DRX in the UE.

The receiver 1230 may receive a request message requesting sidelink CSI from the UE. The request message may be included in sidelink control information. If receiving the sidelink CSI request, the controller 1210 measures channel status information according to the request.

Meanwhile, the sidelink RRC message may include a sidelink DRX parameter. The sidelink DRX parameter may include one or more pieces of information required to perform a DRX operation while the UE performs sidelink communication.

For example, the sidelink DRX parameter may include a sidelink DRX CSI timer for receiving sidelink channel status information (CSI) of the UE. As another example, the sidelink DRX parameter may further include at least one piece of information among a sidelink DRX on-duration timer to be described below, a sidelink DRX slot offset, a sidelink DRX cycle, a sidelink DRX start offset, a sidelink DRX inactivity timer, a sidelink reception DRX HARQ RTT timer, a sidelink reception DRX retransmission timer, and a sidelink transmission DRX retransmission timer as described above. As another example, the sidelink DRX parameter may include a sidelink DRX resource reservation timer. As such, the sidelink RRC message may include various pieces of information necessary for the UE to perform the sidelink DRX operation.

The sidelink DRX CSI timer may be configured to start in association with transmission of sidelink control information including a request for sidelink channel status information from the UE to the another UE. In other words, the UE may receive the sidelink RRC message, configure the sidelink DRX CSI timer, and associate the start of the sidelink DRX CSI timer with the operation of transmitting the sidelink CSI request.

Further, the sidelink DRX CSI timer may be configured to expire upon the generation of at least one event of reception of the sidelink channel status information from another UE and reaching a delay time range set for a report of the sidelink channel status information. For example, when sidelink channel status information is received while the sidelink DRX CSI timer is running, the UE may terminate (expire) the sidelink DRX CSI timer. Or, if a delay time range set for the sidelink channel status information is reached while the sidelink DRX CSI timer is running, the UE may terminate (expire) the sidelink DRX CSI timer.

Therefore, the controller 1210 may control to measure the channel status according to the sidelink CSI request received from the UE and transmit the measurement result during a time period when the sidelink DRX CSI timer configured in the UE is running. For example, in performing sidelink communication, the UE may configure the sidelink DRX parameter and monitor sidelink data discontinuously. Therefore, the sidelink channel status information response according to the sidelink channel status information request should be made when the UE performs sidelink data monitoring.

Besides, the controller 1210 controls the overall operation of the another UE 1200 according to performing sidelink communication through the DRX operation necessary for performing the above-described embodiments.

The transmitter 1220 and the receiver 1230 are used to transmit or receive signals or messages or data necessary for performing the above-described embodiments, with a base station or the UE.

The above-described embodiments may be supported by the standard documents disclosed in IEEE 802, 3GPP, and 3GPP2 which are radio access systems. In other words, steps, components, and parts not described to clarify the technical spirit in the embodiments may be supported by the above-described standard documents. Further, all the terms disclosed in the disclosure may be described by the standard documents disclosed above.

The present embodiments described above may be implemented through various means. For example, the present embodiments may be implemented by various means, e.g., hardware, firmware, software, or a combination thereof.

When implemented in hardware, the method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the disclosure should be construed by the following claims, and all technical spirits within equivalents thereof should be interpreted to belong to the scope of the disclosure.

## CROSS-REFERENCE TO RELATED APPLICATION

The instant patent application claims priority under 35 U.S.C. 119(a) to Korean Patent Application Nos. 10-2021-0002548 filed on January 08, 2021, 10-2021-0025876 filed on February 25, 2021, and 10-2022-0001995 filed on January 06, 2022 in the Korean Intellectual Property Office, the disclosures of which are herein incorporated by reference in their entireties. The present patent application claims priority to other applications to be filed in other countries, the disclosures of which are also incorporated by reference herein in their entireties.

**Claims**

1. A method for performing sidelink communication by a user equipment (UE), the method comprising:

    receiving a sidelink radio resource control (RRC) message from a base station or another UE;
    configuring a sidelink discontinuous reception (DRX) parameter using information included in the sidelink RRC message; and
    monitoring reception of sidelink data using the sidelink DRX parameter.

2. The method of claim 1, wherein the sidelink DRX parameter includes a sidelink DRX channel state information (CSI) timer for receiving sidelink channel status information (CSI).

3. The method of claim 2, wherein the sidelink DRX CSI timer is configured to start in association with transmission of sidelink control information including a request for the sidelink channel status information to another UE.

4. The method of claim 2, wherein the sidelink DRX CSI timer is configured to expire in at least one event of reception of the sidelink channel status information from another UE and reaching a delay time range set for a report of the sidelink channel status information.

5. The method of claim 2, wherein monitoring reception of the sidelink data monitors sidelink control information while the sidelink DRX CSI timer operates.

6. A method for performing sidelink communication by another user equipment (UE), the method comprising:

   transmitting a sidelink radio resource control (RRC) message to a UE;
   receiving a sidelink channel status information (CSI) request from the UE; and
   controlling to transmit the sidelink channel status information while a sidelink discontinuous reception (DRX) CSI timer operates in the UE.

7. The method of claim 6, wherein the sidelink RRC message includes a sidelink discontinuous reception (DRX) parameter, and wherein the sidelink DRX parameter includes the sidelink DRX CSI timer for receiving sidelink channel status information.

8. The method of claim 7, wherein the sidelink DRX CSI timer is configured to start in association with transmission of sidelink control information including a request for the sidelink channel status information to the another UE.

9. The method of claim 7, wherein the sidelink DRX CSI timer is configured to expire in at least one event of reception of the sidelink channel status information from the other UE and reaching a delay time range set for a report of the sidelink channel status information.

10. The method of claim 6, wherein the UE monitors sidelink control information while the sidelink DRX CSI timer operates.

11. A user equipment (UE) for performing sidelink communication, comprising:

   a receiver configured to receive a sidelink radio resource control (RRC) message from a base station or another UE; and
   a controller configured to configure a sidelink discontinuous reception (DRX) parameter using information included in the sidelink RRC message and monitoring reception of sidelink data using the sidelink DRX parameter.

12. The UE of claim 11, wherein the sidelink DRX parameter includes a sidelink DRX CSI timer for receiving sidelink channel status information (CSI).

13. The UE of claim 12, wherein the sidelink DRX CSI timer is configured to start in association with transmission of sidelink control information including a request for the sidelink channel status information to another UE.

14. The UE of claim 12, wherein the sidelink DRX CSI timer is configured to expire in at least one event of reception of the sidelink channel status information from another UE and reaching a delay time range set for a report of the sidelink channel status information.

15. The UE of claim 12, wherein the controller monitors sidelink control information while the sidelink DRX CSI timer operates.

# FIG.1

# FIG.2

One frame, $T_{frame} = 10ms$

One subframe, $T_{subframe} = 1ms$

| #0 | #1 | #2 | #3 | #4 | #5 | #6 | #7 | #8 | #9 |

$\Delta f = 15kHz$ — One slot, 1ms

$\Delta f = 30kHz$ — One slot, 0.5ms

$\Delta f = 60kHz$ — One slot, 0.25ms

$\Delta f = 120kHz$ — One slot, 0.125ms

$\Delta f = 240kHz$ — One slot, 0.0625ms

# FIG.3

One subframe

Resource grid, 2deltaf

Resource grid, deltaf

Carrier bandwidth

One resource block-12 subcarriers,
subcarrier spacing 2deltaf

One resource block-12 subcarriers,
subcarrier spacing 2deltaf

# FIG.4

Carrier (w. RF requirements)

BWP#1 active    BWP#2 active    BWP#1 active

BWP#1

BWP#2

frequency

time

Switch of active bandwidth part

# FIG.5

OFDM symbol number

# FIG.6

TERMINAL(UE)    BASE STATION(gNB)

Preamble(PRACH)

RA Response(RAR)

"Message 3"

Collision resolution {

"Message 4"

# FIG.7

CORESET #4

CORESET #3

CORESET #2

CORESET #1

one slot

FIG.8

EP 4 311 352 A1

# FIG.9

```
        ┌─────────────┐
        │    START    │
        └──────┬──────┘
               │
               ▼
   ┌───────────────────────┐
   │   receive RRC message │───── S900
   └───────────┬───────────┘
               │
               ▼
   ┌───────────────────────────┐
   │ configure sidelink DRX    │───── S910
   │        parameter          │
   └───────────┬───────────────┘
               │
               ▼
   ┌───────────────────────────┐
   │ monitor sidelink data     │───── S920
   │        reception          │
   └───────────┬───────────────┘
               │
               ▼
        ┌─────────────┐
        │     END     │
        └─────────────┘
```

# FIG.10

```
        ┌─────────────┐
        │    START    │
        └──────┬──────┘
               │
               ▼
┌──────────────────────────────────────┐
│       transmit RRC message           │──── S1000
└──────────────────┬───────────────────┘
                   │
                   ▼
┌──────────────────────────────────────┐
│ receive sidelink channel status      │──── S1010
│ information request                  │
└──────────────────┬───────────────────┘
                   │
                   ▼
┌──────────────────────────────────────┐
│ control to transmit sidelink channel │──── S1020
│ status information                   │
└──────────────────┬───────────────────┘
                   │
                   ▼
        ┌─────────────┐
        │     END     │
        └─────────────┘
```

# FIG.11

1100

1110

Controller

1120

Transmitter

1130

Receiver

# FIG.12

*1200*

*1210*

Controller

*1220*

Transmitter

*1230*

Receiver

## INTERNATIONAL SEARCH REPORT

International application No.

**PCT/KR2022/000302**

### A. CLASSIFICATION OF SUBJECT MATTER

**H04W 72/12**(2009.01)i; **H04W 72/04**(2009.01)i; **H04W 76/28**(2018.01)i; **H04W 92/18**(2009.01)i; **H04L 1/18**(2006.01)i

According to International Patent Classification (IPC) or to both national classification and IPC

### B. FIELDS SEARCHED

Minimum documentation searched (classification system followed by classification symbols)

H04W 72/12(2009.01); H04L 5/00(2006.01); H04W 52/02(2009.01); H04W 72/04(2009.01); H04W 76/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), RRC, DRX, 파라미터(parameter), CSI, 타이머(timer)

### C. DOCUMENTS CONSIDERED TO BE RELEVANT

| Category* | Citation of document, with indication, where appropriate, of the relevant passages | Relevant to claim No. |
|---|---|---|
| X<br>Y | FUJITSU. Sidelink DRX for Power Saving. R2-2009133, 3GPP TSG-RAN WG2 #112-e. 21 October 2020.<br>See pages 1-16. | 1,11<br>2-10,12-15 |
| Y | US 2020-0076562 A1 (SUN PATENT TRUST) 05 March 2020 (2020-03-05)<br>See paragraphs [0134], [0163], [0261] and [0300] and figure 8. | 2-10,12-15 |
| A | ZTE et al. Remaining issues on CSI report in the case that DCP is configured. R2-2005125, 3GPP TSG-RAN WG2 #110-e. 22 May 2020.<br>See pages 1-3. | 1-15 |
| A | HUAWEI et al. Sidelink CSI. R1-1909438, 3GPP TSG-RAN WG1 #98. Prague, Czech Republic. 17 August 2019.<br>See pages 1-9. | 1-15 |
| A | US 2015-0208462 A1 (LG ELECTRONICS INC.) 23 July 2015 (2015-07-23)<br>See paragraphs [0030], [0093] and [0148]-[0149] and figures 8-9. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 March 2022** | **25 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000302**

| Patent document cited in search report | | | Publication date (day/month/year) | Patent family member(s) | | | Publication date (day/month/year) |
|---|---|---|---|---|---|---|---|
| US | 2020-0076562 | A1 | 05 March 2020 | BR | 112015023339 | A2 | 18 July 2017 |
| | | | | CA | 2904392 | A1 | 25 September 2014 |
| | | | | CN | 105165085 | A | 16 December 2015 |
| | | | | CN | 105165085 | B | 01 February 2019 |
| | | | | CN | 109981237 | A | 05 July 2019 |
| | | | | CN | 109981237 | B | 22 October 2021 |
| | | | | EP | 2782409 | A1 | 24 September 2014 |
| | | | | EP | 2976923 | A1 | 27 January 2016 |
| | | | | EP | 2976923 | B1 | 03 May 2017 |
| | | | | EP | 3179808 | A1 | 14 June 2017 |
| | | | | EP | 3179808 | B1 | 15 August 2018 |
| | | | | EP | 3416443 | A1 | 19 December 2018 |
| | | | | EP | 3416443 | B1 | 05 February 2020 |
| | | | | EP | 3634064 | A1 | 08 April 2020 |
| | | | | EP | 3634064 | B1 | 21 April 2021 |
| | | | | EP | 3852468 | A1 | 21 July 2021 |
| | | | | JP | 2016-519474 | A | 30 June 2016 |
| | | | | JP | 2019-013016 | A | 24 January 2019 |
| | | | | JP | 2020-129832 | A | 27 August 2020 |
| | | | | JP | 6685032 | B2 | 22 April 2020 |
| | | | | JP | 6709962 | B2 | 17 June 2020 |
| | | | | KR | 10-2015-0132176 | A | 25 November 2015 |
| | | | | KR | 10-2020-0119893 | A | 20 October 2020 |
| | | | | KR | 10-2166750 | B1 | 16 October 2020 |
| | | | | KR | 10-2305061 | B1 | 28 September 2021 |
| | | | | RU | 2015-139699 | A | 26 April 2017 |
| | | | | RU | 2017-139245 | A | 12 February 2019 |
| | | | | TW | 201438429 | A | 01 October 2014 |
| | | | | TW | I643473 | B | 01 December 2018 |
| | | | | US | 10313085 | B2 | 04 June 2019 |
| | | | | US | 10516520 | B2 | 24 December 2019 |
| | | | | US | 10833831 | B2 | 10 November 2020 |
| | | | | US | 2016-0294531 | A1 | 06 October 2016 |
| | | | | US | 2017-0257205 | A1 | 07 September 2017 |
| | | | | US | 2018-0048452 | A1 | 15 February 2018 |
| | | | | US | 2018-0241533 | A1 | 23 August 2018 |
| | | | | US | 2019-0245671 | A1 | 08 August 2019 |
| | | | | US | 2021-0014032 | A1 | 14 January 2021 |
| | | | | US | 9686067 | B2 | 20 June 2017 |
| | | | | US | 9838187 | B2 | 05 December 2017 |
| | | | | US | 9979529 | B2 | 22 May 2018 |
| | | | | WO | 2014-146736 | A1 | 25 September 2014 |
| US | 2015-0208462 | A1 | 23 July 2015 | US | 9844094 | B2 | 12 December 2017 |
| | | | | WO | 2014-025211 | A1 | 13 February 2014 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210002548
- KR 1020210025876
- KR 1020220001995